# EUROPEAN PATENT APPLICATION

(11) **EP 3 664 532 A1**
(43) Date of publication of application: **10.06.2020**
(21) Application number: 18842233.1
(22) Date of filing: 19.06.2018
(51) Int. Cl.: H04W 72/02, H04J 1/00, H04J 99/00, H04L 27/26, H04W 72/04

(54) **COMMUNICATION DEVICE AND COMMUNICATION METHOD**

(30) Priority: 04.08.2017 JP 2017151510
(71) Applicant: Sony Corporation, Tokyo 108-0075 (JP)
(72) Inventor: MATSUDA, Hiroki, Tokyo 108-0075 (JP); SHIMEZAWA, Kazuyuki, Tokyo 108-0075 (JP); KUSASHIMA, Naoki, Tokyo 108-0075 (JP)
(74) Representative: Witte, Weller & Partner Patentanwälte mbB
(86) International application number: PCT/JP2018/023173
(87) International publication number: WO 2019/026443

(57) **Abstract**

[Problem to be Solved] To further improve a transmission efficiency of an entire system [Solution] A communication device including: a communication section that performs radio communication; and a controller that controls to cause control information, which is common to a plurality of terminal devices and includes information related to the radio communication in which a resource is shared between the plurality of terminal devices, to be notified to one of the plurality of terminal devices.

## Description

### Technical Field

The present disclosure relates to a communication device and a communication method.

### Background Art

The third-generation partnership project (3rd Generation Partnership Project: 3GPP) studies radio access schemes and radio networks for cellular mobile communications (hereinafter also referred to as "Long Term Evolution (LTE)", "LTE-Advanced (LTE-A)", "LTE-Advanced Pro (LTE-A Pro)", "New Radio (NR)", "New Radio Access Technology (NRAT)", "Evolved Universal Terrestrial Radio Access (EUTRA)", or "Further EUTRA (FEUTRA)"). In the following explanation, LTE includes LTE-A, LTE-A Pro, and EUTRA, and NR includes fifth-generation mobile radio communication (5G), NRAT, and FEUTRA. In LTE and NR, a base station device (base station) is also referred to as eNodeB (evolved NodeB or gnodeB (gNB), and a terminal device (a mobile station, a mobile station device, or a terminal) is also referred to as UE (User Equipment). LTE and NR are cellular communication systems in which a plurality of areas covered by a base station device are arranged in a cell shape. A single base station device may manage multiple cells.

NR is RAT (Radio Access Technology) that differs from LTE, as a next-generation radio access scheme for LTE. NR is an access technology that is able to accommodate a variety of use cases, including eMBB (Enhanced mobile broadband), mMTC (Massive machine type communications), and URLLC (Ultra reliable and low latency communications). NR is considered with the aim of a technical framework corresponding to utilization scenarios, requirements, deployment scenarios, etc. in their use cases. One technique that has been investigated in NR is Non-Orthogonal Multiple Access (NOMA). This is a technique for improving a frequency utilization efficiency by using a non-orthogonal resource in addition to an orthogonal resource, and details thereof are disclosed in Non-Patent Literature 1.

### Citation List

### Non-Patent Literature

NPLT 1: NTT DOCOMO, INC., "Discussion on multiple access for eMBB" R1-1610076, 3GPP TSG RAN WG1 Meeting #86, Lisbon, Portugal 10th-14th October 2016

### Summary of the Invention

### Problems to be Solved by the Invention

As described above, in NR, in order to cope with various use cases, there is a demand for communication with high frequency utilization efficiency than in the LTE.

Accordingly, the present disclosure proposes a technique that makes it possible to further improve a transmission efficiency of an entire system.

### Means for Solving the Problems

According to an embodiment of the present disclosure, there is provided a communication device including: a communication section that performs radio communication; and a controller that controls to cause control information, which is common to a plurality of terminal devices and includes information related to the radio communication in which a resource is shared between the plurality of terminal devices, to be notified to one of the plurality of terminal devices.

Further, according to an embodiment of the present disclosure, there is provided a communication device including: a communication section that performs radio communication; and a controller that controls the radio communication with another communication device on a basis of control information, the control information being related to the radio communication in which a resource is shared between a plurality of terminal devices and being commonly notified to the plurality of terminal devices.

Further, according to an embodiment of the present disclosure, there is provided a communication device including: a communication section that performs radio communication; and a controller that controls to cause control information related to the radio communication to be notified to a terminal device. In a case where the radio communication in which a resource is shared between the plurality of terminal devices is performed, the controller restricts a size of the control information related to a resource block by restricting the number of resource blocks.

Further, according to an embodiment of the present disclosure, there is provided a communication device including: a communication section that performs radio communication; and an acquisition section that acquires control information related to the radio communication from another communication device. A size of the control information is restricted in accordance with the number of resource blocks in a case where the radio communication in which a resource is shared between a plurality of terminal devices is performed.

Further, according to an embodiment of the present disclosure, there is provided a communication method performed by a computer, the method including: performing radio communication; and controlling to cause control information, which is common to a plurality of terminal devices and includes information related to the radio communication in which a resource is shared between the plurality of terminal devices, to be notified to one of the plurality of terminal devices.

Further, according to an embodiment of the present disclosure, there is provided a communication method performed by a computer, the method including: performing radio communication; and controlling the radio communication with another communication device on a basis of control information, the control information being related to the radio communication in which a resource is shared between a plurality of terminal devices and being commonly notified to the plurality of terminal devices.

Further, according to an embodiment of the present disclosure, there is provided a communication method performed by a computer, the method including: performing radio communication; and controlling to cause control information related to the radio communication to be notified to a terminal device. In a case where the radio communication in which a resource is shared between the plurality of terminal devices is performed, a size of the control information related to a resource block is restricted by restricting the number of resource blocks.

Further, according to an embodiment of the present disclosure, there is provided a communication method performed by a computer, the method including: performing radio communication; and acquiring control information related to the radio communication from another communication device. A size of the control information is restricted in accordance with restriction on the number of resource blocks in a case where the radio communication in which a resource is shared between a plurality of terminal devices is performed.

### Effects of the Invention

As described above, according to an embodiment of the present disclosure, a technique is provided that makes it possible to further improve the transmission efficiency of the entire system.

Note that the effects described above are not necessarily limitative. With or in the place of the above effects, there may be achieved any one of the effects described in this specification or other effects that may be grasped from this specification.

### Brief Description of Drawings

[FIG. 1] FIG. 1 is a diagram illustrating an example of setting of a component carrier according to an embodiment of the present disclosure.
[FIG. 2] FIG. 2 is a diagram illustrating an example of setting of a component carrier according to the embodiment.
[FIG. 3] FIG. 3 is a diagram illustrating examples of parameter sets related to a transmission signal in an NR cell.
[FIG. 4] FIG. 4 is a diagram illustrating an example of a downlink subframe of NR according to the embodiment.
[FIG. 5] FIG. 5 is a diagram illustrating an example of an uplink subframe of NR according to the embodiment.
[FIG. 6] FIG. 6 is a schematic block diagram illustrating a configuration of a base station device 1 according to the embodiment.
[FIG. 7] FIG. 7 is a schematic block diagram illustrating a configuration of a terminal device 2 according to the embodiment.
[FIG. 8] FIG. 8 is a diagram illustrating an example of a frame configuration of self-contained transmission according to the embodiment.
[FIG. 9] FIG. 9 is an explanatory diagram for explaining an outline of an example of NOMA transmission.
[FIG. 10] FIG. 10 is an explanatory diagram for explaining an outline of another example of the NOMA transmission.
[FIG. 11] FIG. 11 is an explanatory diagram for explaining an outline of another example of the NOMA transmission.
[FIG. 12] FIG. 12 is an explanatory diagram for explaining an outline of another example of the NOMA transmission.
[FIG. 13] FIG. 13 is an explanatory diagram for explaining an outline of an example of the NOMA transmission.
[FIG. 14] FIG. 14 is an explanatory diagram for explaining an outline of Grant-based transmission.
[FIG. 15] FIG. 15 is an explanatory diagram for explaining an outline of Grant-free transmission.
[FIG. 16] FIG. 16 is an explanatory diagram for explaining an example of an operation related to notification of resource allocation information in Grant-based NOMA transmission.
[FIG. 17] FIG. 17 is an explanatory diagram for explaining an example of technology in which a system according to the embodiment makes it possible to efficiently notify control information.
[FIG. 18] FIG. 18 is an explanatory diagram for explaining an example of an operation related to notification of the resource allocation information in SPS transmission.
[FIG. 19] FIG. 19 is an explanatory diagram for explaining an example of technology in which a system according to the embodiment makes it possible to efficiently notify control information.
[FIG. 20] FIG. 20 is an explanatory diagram for explaining an example of dynamically adding/deleting a terminal device to/from a group.
[FIG. 21] FIG. 21 is an explanatory diagram for explaining an outline of an example of scrambling of DCI in a case where the SPS transmission is performed.
[FIG. 22] FIG. 22 is an explanatory diagram for explaining an outline of an example of scrambling of DCI in a case where the Grant-free transmission is performed.
[FIG. 23] FIG. 23 is an explanatory diagram for explaining an outline of an example of resource block allocation in each of OMA transmission and NOMA transmission.
[FIG. 24] FIG. 24 is a block diagram illustrating a first example of a schematic configuration of eNB.
[FIG. 25] FIG. 25 is a block diagram illustrating a second example of a schematic configuration of eNB.
[FIG. 26] FIG. 26 is a block diagram illustrating an example of a schematic configuration of a smartphone.
[FIG. 27] FIG. 27 is a block diagram illustrating an example of a schematic configuration of a car navigation device.

### Modes for Carrying Out the Invention

The following describes a preferred embodiment of the present disclosure in detail with reference to the accompanying drawings. It is to be noted that, in this description and the accompanying drawings, components that have substantially the same functional configuration are indicated by the same reference signs, and thus redundant description thereof is omitted.

Note that the description is given in the following order.
1. Embodiment
2. Application Examples
   2.1. Application Example Related to Base Station
   2.2. Application Example Related to Terminal Device
3. Conclusion

### <<1. Embodiment>>

The following describes a preferred embodiment of the present disclosure in detail with reference to the accompanying drawings. It is to be noted that, in this description and the accompanying drawings, components that have substantially the same functional configuration are indicated by the same reference signs, and thus redundant description thereof is omitted. Also, unless otherwise specified, all descriptions of the techniques, functions, methods, configurations, procedures, and the like described below are applicable to LTE and NR.

### <Radio Communication System in Present Embodiment

In the present embodiment, a radio communication system includes at least a base station device 1 and a terminal device 2. The base station device 1 may contain a plurality of terminal devices. The base station device 1 may be coupled to another base station device by means of an X2 interface. The base station device 1 may be coupled to EPC (Evolved Packet Core) by means of an S1 interface. Moreover, the base station device 1 may be coupled to MME (Mobility Management Entity) by means of an S1-MME interface and to S-GW (Serving Gateway) by means of an S1-U interface. The S1 interface supports many-to-many connections between MME and/or S-GW and the base station device 1. In the present embodiment, the base station device 1 and the terminal device 2 each support LTE and/or NR.

### <Radio Access Technology According to Present Embodiment

In the present embodiment, the base station device 1 and the terminal device 2 each support one or more radio access technologies (RATs). For example, RAT includes LTE and NR. One RAT corresponds to one cell (component carrier). That is, in a case where multiple RATs are supported, the RATs correspond to different cells. In the present embodiment, a cell is a combination of a downlink resource, an uplink resource, and/or a sidelink. In the following description, a cell corresponding to LTE is referred to as an LTE cell, and a cell corresponding to NR is referred to as an NR cell.

Downlink communication is communication from the base station device 1 to the terminal device 2. Uplink communication is communication from the terminal device 2 to the base station device 1. Sidelink communication is communication from the terminal device 2 to another terminal device 2.

The sidelink communication is defined for contiguous direct detection and contiguous direct communication between terminal devices. The sidelink communication can use a frame configuration similar to that of the uplink and downlink. Further, the sidelink communication can be restricted to some (sub sets) of uplink resources and/or downlink resources.

The base station device 1 and the terminal device 2 can support communication in which a set of one or more cells is used in a downlink, an uplink, and/or a sidelink. A set of a plurality of cells is also referred to as carrier aggregation or dual connectivity. The details of the carrier aggregation and the dual connectivity will be described below. Further, each cell uses a predetermined frequency bandwidth. A maximum value, a minimum value, and a settable value in the predetermined frequency bandwidth can be specified in advance.

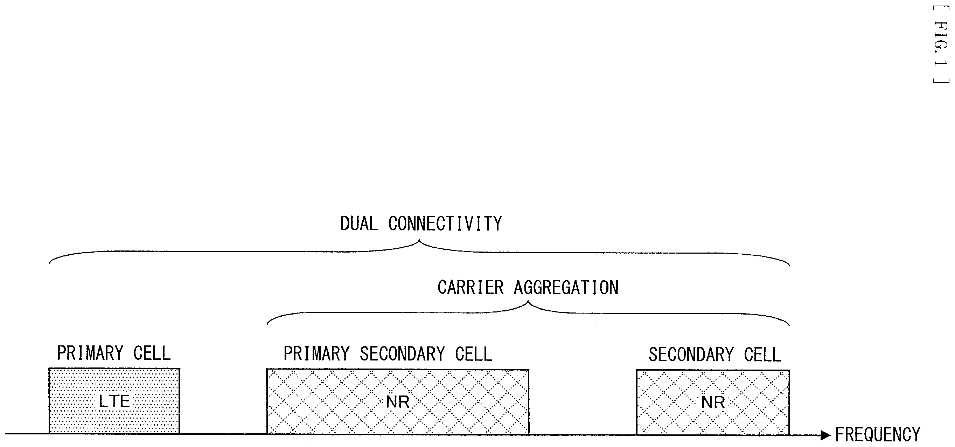

FIG. 1 is a diagram illustrating an example of setting of a component carrier according to the present embodiment. In the example of FIG. 1, one LTE cell and two NR cells are set. One LTE cell is set as a primary cell. Two NR cells are set as a primary and secondary cell and a secondary cell. Two NR cells are integrated by the carrier aggregation. Further, the LTE cell and the NR cell are integrated by the dual connectivity. Note that the LTE cell and the NR cell may be integrated by carrier aggregation. In the example of FIG. 1, NR may not necessarily support some functions such as a function of performing standalone communication since connection can be assisted by an LTE cell which is a primary cell. The function of performing standalone communication includes a function necessary for initial connection.

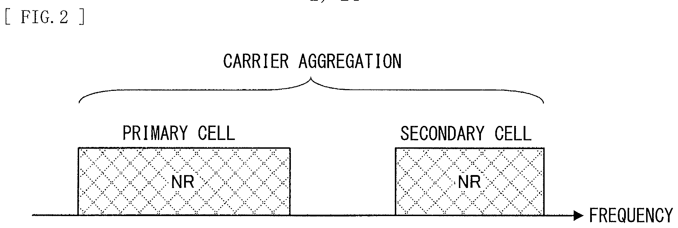

FIG. 2 is a diagram illustrating an example of setting of a component carrier according to the present embodiment. In the example of FIG. 2, two NR cells are set. The two NR cells are set as a primary cell and a secondary cell, respectively, and are integrated by carrier aggregation. In this case, when the NR cell supports the function of performing standalone communication, assistance by the LTE cell is not necessary. Note that the two NR cells may be integrated by dual connectivity.

### <Radio Frame Configuration According to Present Embodiment>

In the present embodiment, a radio frame configured with 10 ms (milliseconds) is specified. Each radio frame includes two half frames. A time interval of the half frame is 5 ms. Each half frame includes 5 subframes. The time interval of the subframe is 1 ms and is defined by two successive slots. The time interval of the slot is 0.5 ms. An i-th subframe in the radio frame includes a (2×i)-th slot and a (2×i+1)-th slot. In other words, 10 subframes are specified in each of the radio frames.

Subframes include a downlink subframe, an uplink subframe, a special subframe, a sidelink subframe, and the like.

The downlink subframe is a subframe reserved for downlink transmission. The uplink subframe is a subframe reserved for uplink transmission. The special subframe includes three fields. The three fields are a Downlink Pilot Time Slot (DwPTS), a Guard Period (GP), and an Uplink Pilot Time Slot (UpPTS). A total length of DwPTS, GP, and UpPTS is 1 ms. The DwPTS is a field reserved for downlink transmission. The UpPTS is a field reserved for uplink transmission. The GP is a field in which downlink transmission and uplink transmission are not performed. Further, the special subframe may include only the DwPTS and the GP or may include only the GP and the UpPTS. The special subframe is placed between the downlink subframe and the uplink subframe in TDD and used to perform switching from the downlink subframe to the uplink subframe. The sidelink subframe is a subframe reserved or set for sidelink communication. The sidelink is used for contiguous direct communication and contiguous direct detection between terminal devices.

A single radio frame includes a downlink subframe, an uplink subframe, a special subframe, and/or a sidelink subframe. Further, a single radio frame includes only a downlink subframe, an uplink subframe, a special subframe, or a sidelink subframe.

A plurality of radio frame configurations are supported. The radio frame configuration is specified by the frame configuration type. The frame configuration type 1 can be applied only to FDD. The frame configuration type 2 can be applied only to TDD. The frame configuration type 3 can be applied only to an operation of a licensed assisted access (LAA) secondary cell.

In the frame configuration type 2, a plurality of uplink-downlink configurations is specified. In the uplink-downlink configuration, each of 10 subframes in one radio frame corresponds to one of the downlink subframe, the uplink subframe, and the special subframe. The subframe 0, the subframe 5 and the DwPTS are constantly reserved for downlink transmission. The UpPTS and the subframe just after the special subframe are constantly reserved for uplink transmission.

In the frame configuration type 3, 10 subframes in one radio frame are reserved for downlink transmission. The terminal device 2 treats a subframe by which PDSCH or a detection signal is not transmitted, as an empty subframe. Unless a predetermined signal, channel and/or downlink transmission is detected in a certain subframe, the terminal device 2 assumes that there is no signal and/or channel in the subframe. The downlink transmission is exclusively occupied by one or more consecutive subframes. The first subframe of the downlink transmission may be started from any one in that subframe. The last subframe of the downlink transmission may be either completely exclusively occupied or exclusively occupied by a time interval specified in the DwPTS.

Further, in the frame configuration type 3, 10 subframes in one radio frame may be reserved for uplink transmission. Further, each of 10 subframes in one radio frame may correspond to any one of the downlink subframe, the uplink subframe, the special subframe, and the sidelink subframe.

The base station device 1 may transmit a physical downlink channel and a physical downlink signal in the DwPTS of the special subframe. The base station device 1 can restrict transmission of PBCH in the DwPTS of the special subframe. The terminal device 2 may transmit physical uplink channels and physical uplink signals in the UpPTS of the special subframe. The terminal device 2 can restrict transmission of some of the physical uplink channels and the physical uplink signals in the UpPTS of the special subframe.

### <Frame Configuration of NR According to Present Embodiment>

In each NR cell, one or more predetermined parameters are used in a certain predetermined time length (for example, a subframe). That is, in the NR cell, a downlink signal and an uplink signal are each generated using one or more predetermined parameters in a predetermined time length. In other words, in the terminal device 2, it is assumed that a downlink signal to be transmitted from the base station device 1 and an uplink signal to be transmitted to the base station device 1 are each generated with one or more predetermined parameters in a predetermined time length. Further, the base station device 1 is set such that a downlink signal to be transmitted to the terminal device 2 and an uplink signal to be transmitted from the terminal device 2 are each generated with a predetermined time length using one or more predetermined parameters. In a case where the plurality of predetermined parameters is used, a signal generated using the predetermined parameters is multiplexed in accordance with a predetermined method. For example, the predetermined method includes Frequency Division Multiplexing (FDM), Time Division Multiplexing (TDM), Code Division Multiplexing (CDM), and/or Spatial Division Multiplexing (SDM).

In a combination of the predetermined parameters set in the NR cell, a plurality of kinds of parameter sets can be specified in advance.

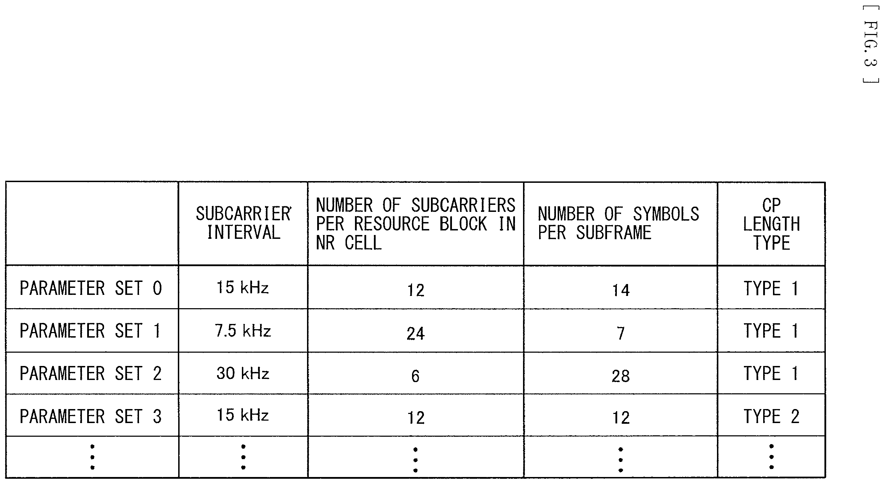

FIG. 3 is a diagram illustrating examples of the parameter sets related to a transmission signal in the NR cell. In the example of FIG. 3, parameters of the transmission signal included in the parameter sets include a sub frame interval, the number of subcarriers per resource block in the NR cell, the number of symbols per subframe, and a CP length type. The CP length type is a type of CP length used in the NR cell. For example, CP length type 1 corresponds to a normal CP in LTE and CP length type 2 corresponds to an extended CP in LTE.

The parameter sets related to a transmission signal in the NR cell can be specified individually with a downlink and an uplink. Further, the parameter sets related to a transmission signal in the NR cell can be set independently with a downlink and an uplink.

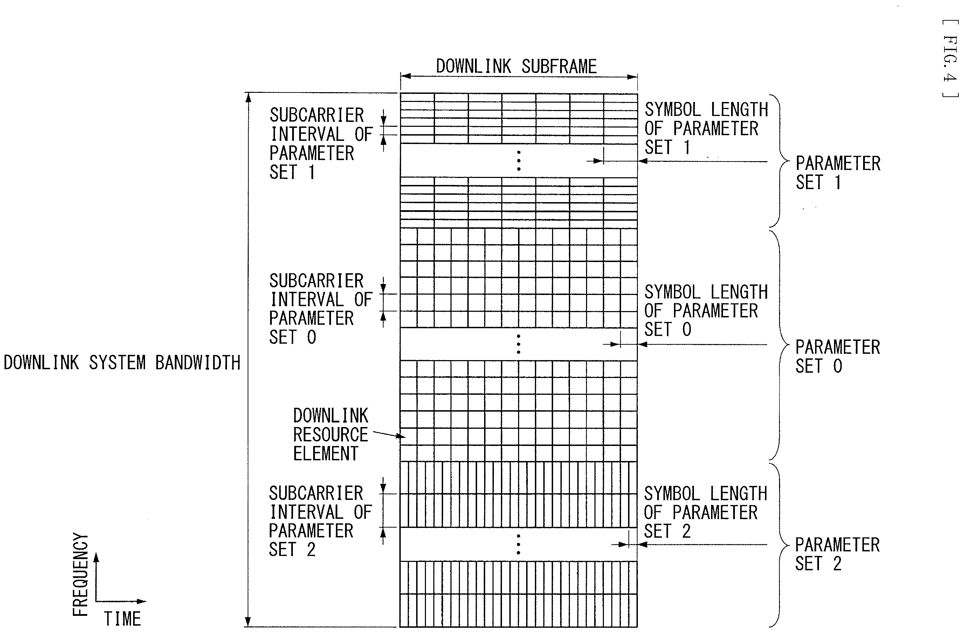

FIG. 4 is a diagram illustrating an example of an NR downlink subframe of the present embodiment. In the example of FIG. 4, signals generated using parameter set 1, parameter set 0, and parameter set 2 are subjected to FDM in a cell (system bandwidth). The diagram illustrated in FIG. 4 is also referred to as a downlink resource grid of NR. The base station device 1 can transmit the physical downlink channel of NR and/or the physical downlink signal of NR in a downlink subframe to the terminal device 2. The terminal device 2 can receive a physical downlink channel of NR and/or the physical downlink signal of NR in a downlink subframe from the base station device 1.

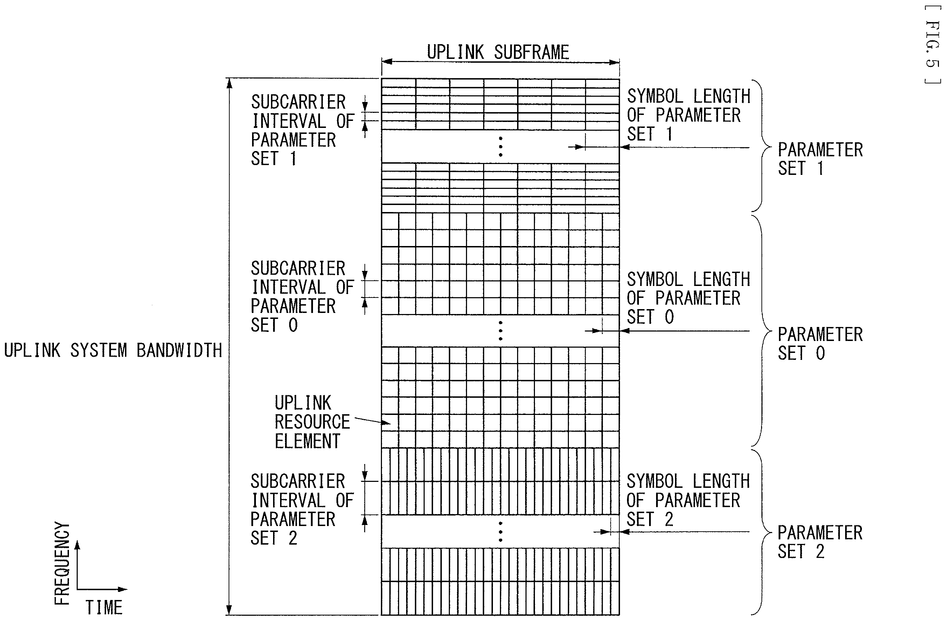

FIG. 5 is a diagram illustrating an example of an NR uplink subframe of the present embodiment. In the example of FIG. 5, signals generated using parameter set 1, parameter set 0, and parameter set 2 are subjected to FDM in a cell (system bandwidth). The diagram illustrated in FIG. 4 is also referred to as an uplink resource grid of NR. The base station device 1 can transmit the physical uplink channel of NR and/or the physical uplink signal of NR in an uplink subframe to the terminal device 2. The terminal device 2 can receive a physical uplink channel of NR and/or the physical uplink signal of NR in an uplink subframe from the base station device 1.

### <Configuration Example of Base Station Device 1 According to Present Embodiment>

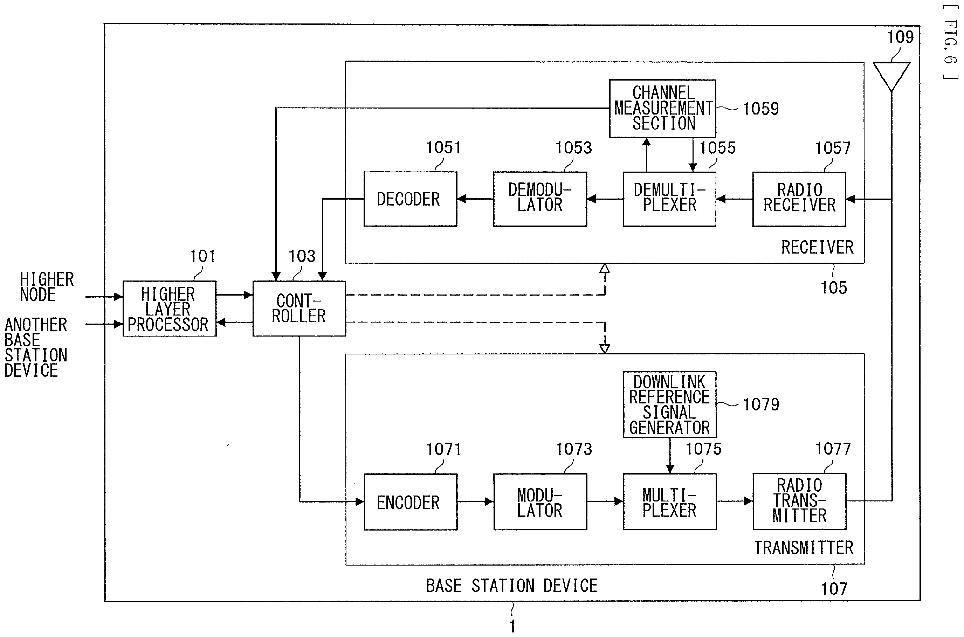

FIG. 6 is a schematic block diagram illustrating a configuration of the base station device 1 of the present embodiment. As illustrated in FIG. 6, the base station device 1 includes a higher layer processor 101, a controller 103, a receiver 105, a transmitter 107, and a transmission-reception antenna 109. Further, the receiver 105 includes a decoder 1051, a demodulator 1053, a demultiplexer 1055, a radio receiver 1057, and a channel measurement section 1059. Further, the transmitter 107 includes an encoder 1071, a modulator 1073, a multiplexer 1075, a radio transmitter 1077, and a downlink reference signal generator 1079.

As described above, the base station device 1 can support one or more RATs. Some or all of the sections included in the base station device 1 illustrated in FIG. 6 can be configured individually in accordance with the RAT. For example, the receiver 105 and the transmitter 107 are configured individually in LTE and NR. Further, in the NR cell, some or all of the sections included in the base station device 1 illustrated in FIG. 6 can be configured individually in accordance with a parameter set related to the transmission signal. For example, in a certain NR cell, the radio receiver 1057 and the radio transmitter 1077 can be configured individually in accordance with a parameter set related to the transmission signal.

The higher layer processor 101 performs processes of a medium access control (MAC) layer, a packet data convergence protocol (PDCP) layer, a radio link control (RLC) layer, and a radio resource control (RRC) layer. Further, the higher layer processor 101 generates control information to control the receiver 105 and the transmitter 107 and outputs the control information to the controller 103.

The controller 103 controls the receiver 105 and the transmitter 107 on the basis of the control information from the higher layer processor 101. The controller 103 generates control information to be transmitted to the higher layer processor 101 and outputs the control information to the higher layer processor 101. The controller 103 receives a decoded signal from the decoder 1051 and a channel estimation result from the channel measurement section 1059. The controller 103 outputs a signal to be encoded to the encoder 1071. Further, the controller 103 is used to control the whole or a part of the base station device 1.

The higher layer processor 101 performs a process and management related to RAT control, radio resource control, subframe setting, scheduling control, and/or CSI report control. The process and the management in the higher layer processor 101 are performed for each terminal device or in common to terminal devices connected to the base station device. The process and the management in the higher layer processor 101 may be performed only by the higher layer processor 101 or may be acquired from a higher node or another base station device. Further, the process and the management in the higher layer processor 101 may be individually performed in accordance with the RAT. For example, the higher layer processor 101 individually performs the process and the management in LTE and the process and the management in NR.

Under the RAT control of the higher layer processor 101, management related to the RAT is performed. For example, under the RAT control, the management related to LTE and/or the management related to NR is performed. The management related to NR includes setting and a process of a parameter set related to the transmission signal in the NR cell.

In the radio resource control in the higher layer processor 101, generation and/or management of downlink data (transport block), system information, an RRC message (RRC parameter), and/or a MAC control element (CE) are performed.

In a subframe setting in the higher layer processor 101, management of a subframe setting, a subframe pattern setting, an uplink-downlink setting, an uplink reference UL-DL setting, and/or a downlink reference UL-DL setting is performed. Further, the subframe setting in the higher layer processor 101 is also referred to as a base station subframe setting. Further, the subframe setting in the higher layer processor 101 can be decided on the basis of an uplink traffic volume and a downlink traffic volume. Further, the subframe setting in the higher layer processor 101 can be decided on the basis of a scheduling result of scheduling control in the higher layer processor 101.

In the scheduling control in the higher layer processor 101, a frequency and a subframe to which the physical channel is allocated, a coding rate, a modulation scheme, and transmission power of the physical channels, and the like are decided on the basis of the received channel state information, an estimation value, a channel quality, or the like of a propagation path inputted from the channel measurement section 1059, and the like. For example, the controller 103 generates the control information (DCI format) on the basis of the scheduling result of the scheduling control in the higher layer processor 101.

In the CSI report control in the higher layer processor 101, the CSI report of the terminal device 2 is controlled. For example, a settings related to the CSI reference resources assumed to calculate the CSI in the terminal device 2 is controlled.

Under the control from the controller 103, the receiver 105 receives a signal transmitted from the terminal device 2 via the transmission-reception antenna 109, performs a reception process such as demultiplexing, demodulation, and decoding, and outputs information which has undergone the reception process to the controller 103. Note that, the reception process in the receiver 105 is performed on the basis of a setting which is specified in advance or a setting notified from the base station device 1 to the terminal device 2.

The radio receiver 1057 performs conversion into an intermediate frequency (down conversion), removal of an unnecessary frequency component, control of an amplification level such that a signal level is appropriately maintained, quadrature demodulation based on an in-phase component and a quadrature component of a received signal, conversion from an analog signal into a digital signal, removal of a guard interval (GI), and/or extraction of a signal in the frequency domain by fast Fourier transform (FFT) on the uplink signal received via the transmission-reception antenna 109.

The demultiplexer 1055 separates the uplink channel such as the PUCCH or the PUSCH and/or uplink reference signal from the signal input from the radio receiver 1057. The demultiplexer 1055 outputs the uplink reference signal to the channel measurement section 1059. The demultiplexer 1055 compensates the propagation path for the uplink channel from the estimation value of the propagation path input from the channel measurement section 1059.

The demodulator 1053 demodulates the reception signal for the modulation symbol of the uplink channel using a modulation scheme such as binary phase shift keying (BPSK), quadrature phase shift keying (QPSK), 16 quadrature amplitude modulation (QAM), 64 QAM, or 256 QAM. The demodulator 1053 performs separation and demodulation of a MIMO multiplexed uplink channel.

The decoder 1051 performs a decoding process on encoded bits of the demodulated uplink channel. The decoded uplink data and/or uplink control information are output to the controller 103. The decoder 1051 performs a decoding process on the PUSCH for each transport block.

The channel measurement section 1059 measures the estimation value, a channel quality, and/or the like of the propagation path from the uplink reference signal input from the demultiplexer 1055, and outputs the estimation value, a channel quality, and/or the like of the propagation path to the demultiplexer 1055 and/or the controller 103. For example, the UL-DMRS measures the estimation value of the propagation path for propagation path compensation for the PUCCH or the PUSCH, and the SRS measures an uplink channel quality.

The transmitter 107 carries out a transmission process such as encoding, modulation, and multiplexing on downlink control information and downlink data input from the higher layer processor 101 under the control of the controller 103. For example, the transmitter 107 generates and multiplexes the PHICH, the PDCCH, the EPDCCH, the PDSCH, and the downlink reference signal and generates a transmission signal. Further, the transmission process in the transmitter 107 is performed on the basis of a setting which is specified in advance, a setting notified from the base station device 1 to the terminal device 2, or a setting notified through the PDCCH or the EPDCCH transmitted through the same subframe.

The encoder 1071 encodes the HARQ indicator (HARQ-ACK), the downlink control information, and the downlink data input from the controller 103 using a predetermined coding scheme such as block coding, convolutional coding, turbo coding, or the like. The modulator 1073 modulates the encoded bits input from the encoder 1071 using a predetermined modulation scheme such as BPSK, QPSK, 16 QAM, 64 QAM, or 256 QAM. The downlink reference signal generator 1079 generates the downlink reference signal on the basis of a physical cell identification (PCI), an RRC parameter set in the terminal device 2, and the like. The multiplexer 1075 multiplexes a modulated symbol and the downlink reference signal of each channel and arranges resulting data in a predetermined resource element.

The radio transmitter 1077 performs processes such as conversion into a signal in the time domain by inverse fast Fourier transform (IFFT), addition of the guard interval, generation of a baseband digital signal, conversion in an analog signal, quadrature modulation, conversion from a signal of an intermediate frequency into a signal of a high frequency (up conversion), removal of an extra frequency component, and amplification of power on the signal from the multiplexer 1075, and generates a transmission signal. The transmission signal output from the radio transmitter 1077 is transmitted through the transmission-reception antenna 109.

### <Configuration Example of Terminal Device 2 According to Present Embodiment>

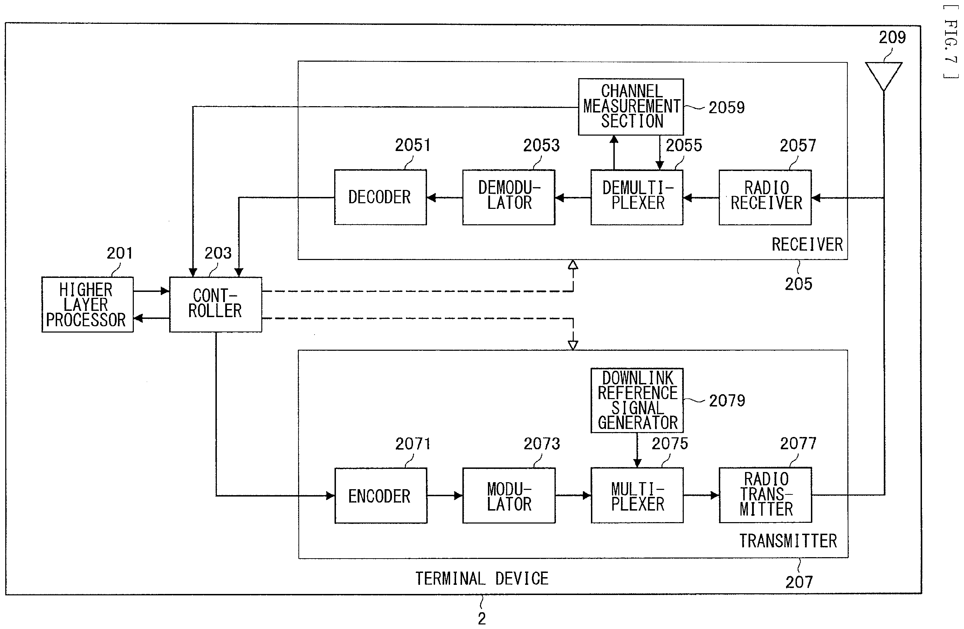

FIG. 7 is a schematic block diagram illustrating a configuration of the terminal device 2 of the present embodiment. As illustrated in FIG. 7, the terminal device 2 includes a higher layer processor 201, a controller 203, a receiver 205, a transmitter 207, and a transmission-reception antenna 209. Further, the receiver 205 includes a decoder 2051, a demodulator 2053, a demultiplexer 2055, a radio receiver 2057, and a channel measurement section 2059. Further, the transmitter 207 includes an encoder 2071, a modulator 2073, a multiplexer 2075, a radio transmitter 2077, and an uplink reference signal generator 2079.

As described above, the terminal device 2 can support one or more RATs. Some or all of the sections included in the terminal device 2 illustrated in FIG. 7 can be configured individually in accordance with the RAT. For example, the receiver 205 and the transmitter 207 are configured individually in LTE and NR. Further, in the NR cell, some or all of the sections included in the terminal device 2 illustrated in FIG. 7 can be configured individually in accordance with a parameter set related to the transmission signal. For example, in a certain NR cell, the radio receiver 2057 and the radio transmitter 2077 can be configured individually in accordance with a parameter set related to the transmission signal.

The higher layer processor 201 outputs uplink data (transport block) to the controller 203. The higher layer processor 201 performs processes of a medium access control (MAC) layer, a packet data convergence protocol (PDCP) layer, a radio link control (RLC) layer, and a radio resource control (RRC) layer. Further, the higher layer processor 201 generates control information to control the receiver 205 and the transmitter 207 and outputs the control information to the controller 203.

The controller 203 controls the receiver 205 and the transmitter 207 on the basis of the control information from the higher layer processor 201. The controller 203 generates control information to be transmitted to the higher layer processor 201 and outputs the control information to the higher layer processor 201. The controller 203 receives a decoded signal from the decoder 2051 and a channel estimation result from the channel measurement section 2059. The controller 203 outputs a signal to be encoded to the encoder 2071. Further, the controller 203 may be used to control the whole or a part of the terminal device 2.

The higher layer processor 201 performs a process and management related to RAT control, radio resource control, subframe setting, scheduling control, and/or CSI report control. The process and the management in the higher layer processor 201 are performed on the basis of a setting which is specified in advance and/or a setting based on control information set or notified from the base station device 1. For example, the control information from the base station device 1 includes the RRC parameter, the MAC control element, or the DCI. Further, the process and the management in the higher layer processor 201 may be individually performed in accordance with the RAT. For example, the higher layer processor 201 individually performs the process and the management in LTE and the process and the management in NR.

Under the RAT control of the higher layer processor 201, management related to the RAT is performed. For example, under the RAT control, the management related to LTE and/or the management related to NR is performed. The management related to NR includes setting and a process of a parameter set related to the transmission signal in the NR cell.

In the radio resource control in the higher layer processor 201, the setting information in the terminal device 2 is managed. In the radio resource control in the higher layer processor 201, generation and/or management of uplink data (transport block), system information, an RRC message (RRC parameter), and/or a MAC control element (CE) are performed.

In the subframe setting in the higher layer processor 201, the subframe setting in the base station device 1 and/or a base station device different from the base station device 1 is managed. The subframe setting includes an uplink or downlink setting for the subframe, a subframe pattern setting, an uplink-downlink setting, an uplink reference UL-DL setting, and/or a downlink reference UL-DL setting. Further, the subframe setting in the higher layer processor 201 is also referred to as a terminal subframe setting.

In the scheduling control in the higher layer processor 201, control information for controlling scheduling on the receiver 205 and the transmitter 207 is generated on the basis of the DCI (scheduling information) from the base station device 1.

In the CSI report control in the higher layer processor 201, control related to the report of the CSI to the base station device 1 is performed. For example, in the CSI report control, a setting related to the CSI reference resources assumed for calculating the CSI by the channel measurement section 2059 is controlled. In the CSI report control, resource (timing) used for reporting the CSI is controlled on the basis of the DCI and/or the RRC parameter.

Under the control from the controller 203, the receiver 205 receives a signal transmitted from the base station device 1 via the transmission-reception antenna 209, performs a reception process such as demultiplexing, demodulation, and decoding, and outputs information which has undergone the reception process to the controller 203. Note that, the reception process in the receiver 205 is performed on the basis of a setting which is specified in advance or a notification from the base station device 1 or a setting.

The radio receiver 2057 performs conversion into an intermediate frequency (down conversion), removal of an unnecessary frequency component, control of an amplification level such that a signal level is appropriately maintained, quadrature demodulation based on an in-phase component and a quadrature component of a received signal, conversion from an analog signal into a digital signal, removal of a guard interval (GI), and/or extraction of a signal in the frequency domain by fast Fourier transform (FFT) on the uplink signal received via the transmission-reception antenna 209.

The demultiplexer 2055 separates the downlink channel such as the PHICH, PDCCH, EPDCCH, or PDSCH, downlink synchronization signal and/or downlink reference signal from the signal input from the radio receiver 2057. The demultiplexer 2055 outputs the uplink reference signal to the channel measurement section 2059. The demultiplexer 2055 compensates the propagation path for the uplink channel from the estimation value of the propagation path input from the channel measurement section 2059.

The demodulator 2053 demodulates the reception signal for the modulation symbol of the downlink channel using a modulation scheme such as BPSK, QPSK, 16 QAM, 64 QAM, or 256 QAM. The demodulator 2053 performs separation and demodulation of a MIMO multiplexed downlink channel.

The decoder 2051 performs a decoding process on encoded bits of the demodulated downlink channel. The decoded downlink data and/or downlink control information are output to the controller 203. The decoder 2051 performs a decoding process on the PDSCH for each transport block.

The channel measurement section 2059 measures the estimation value, a channel quality, and/or the like of the propagation path from the downlink reference signal input from the demultiplexer 2055, and outputs the estimation value, a channel quality, and/or the like of the propagation path to the demultiplexer 2055 and/or the controller 203. The downlink reference signal used for measurement by the channel measurement section 2059 may be decided on the basis of at least a transmission mode set by the RRC parameter and/or other RRC parameters. For example, the estimation value of the propagation path for performing the propagation path compensation on the PDSCH or the EPDCCH is measured through the DL-DMRS. The estimation value of the propagation path for performing the propagation path compensation on the PDCCH or the PDSCH and/or the downlink channel for reporting the CSI are measured through the CRS. The downlink channel for reporting the CSI is measured through the CSI-RS. The channel measurement section 2059 calculates a reference signal received power (RSRP) and/or a reference signal received quality (RSRQ) on the basis of the CRS, the CSI-RS, or the discovery signal, and outputs the RSRP and/or the RSRQ to the higher layer processor 201.

The transmitter 207 performs a transmission process such as encoding, modulation, and multiplexing on the uplink control information and the uplink data input from the higher layer processor 201 under the control of the controller 203. For example, the transmitter 207 generates and multiplexes the uplink channel such as the PUSCH or the PUCCH and/or the uplink reference signal, and generates a transmission signal. Note that, the transmission process in the transmitter 207 is performed on the basis of a setting which is specified in advance or a setting set or notified from the base station device 1.

The encoder 2071 encodes the HARQ indicator (HARQ-ACK), the uplink control information, and the uplink data input from the controller 203 using a predetermined coding scheme such as block coding, convolutional coding, turbo coding, or the like. The modulator 2073 modulates the encoded bits input from the encoder 2071 using a predetermined modulation scheme such as BPSK, QPSK, 16 QAM, 64 QAM, or 256 QAM. The uplink reference signal generator 2079 generates the uplink reference signal on the basis of an RRC parameter set in the terminal device 2, and the like. The multiplexer 2075 multiplexes a modulated symbol and the uplink reference signal of each channel and arranges resulting data in a predetermined resource element.

The radio transmitter 2077 performs processes such as conversion into a signal in the time domain by inverse fast Fourier transform (IFFT), addition of the guard interval, generation of a baseband digital signal, conversion in an analog signal, quadrature modulation, conversion from a signal of an intermediate frequency into a signal of a high frequency (up conversion), removal of an extra frequency component, and amplification of power on the signal from the multiplexer 2075, and generates a transmission signal. The transmission signal output from the radio transmitter 2077 is transmitted through the transmission-reception antenna 209.

### <Signaling of Control Information According to Present Embodiment>

The base station device 1 and the terminal device 2 can use various methods for signaling (notification, broadcasting, or setting) of the control information. The signaling of the control information can be performed in various layers (layers). The signaling of the control information includes signaling of the physical layer which is signaling performed through the physical layer, RRC signaling which is signaling performed through the RRC layer, and MAC signaling which is signaling performed through the MAC layer. The RRC signaling is dedicated RRC signaling for notifying the terminal device 2 of the control information specific or a common RRC signaling for notifying of the control information specific to the base station device 1. The signaling used by a layer higher than the physical layer such as RRC signaling and MAC signaling is also referred to as signaling of the higher layer.

The RRC signaling is implemented by signaling the RRC parameter. The MAC signaling is implemented by signaling the MAC control element. The signaling of the physical layer is implemented by signaling the downlink control information (DCI) or the uplink control information (UCI). The RRC parameter and the MAC control element are transmitted using the PDSCH or the PUSCH. The DCI is transmitted using the PDCCH or the EPDCCH. The UCI is transmitted using the PUCCH or the PUSCH. The RRC signaling and the MAC signaling are used for signaling semi-static control information and are also referred to as semi-static signaling. The signaling of the physical layer is used for signaling dynamic control information and also referred to as dynamic signaling. The DCI is used for scheduling of the PDSCH or scheduling of the PUSCH. The UCI is used for the CSI report, the HARQ-ACK report, and/or the scheduling request (SR).

### <Details of Downlink Control Information According to Present Embodiment>

The DCI is notified using the DCI format having a field which is specified in advance. Predetermined information bits are mapped to the field specified in the DCI format. The DCI notifies downlink scheduling information, uplink scheduling information, sidelink scheduling information, a request for a non-periodic CSI report, or an uplink transmission power command.

The DCI format monitored by the terminal device 2 is decided in accordance with the transmission mode set for each serving cell. In other words, a part of the DCI format monitored by the terminal device 2 can differ depending on the transmission mode. For example, the terminal device 2 in which a downlink transmission mode 1 is set monitors the DCI format 1A and the DCI format 1. For example, the terminal device 2 in which a downlink transmission mode 4 is set monitors the DCI format 1A and the DCI format 2. For example, the terminal device 2 in which an uplink transmission mode 1 is set monitors the DCI format 0. For example, the terminal device 2 in which an uplink transmission mode 2 is set monitors the DCI format 0 and the DCI format 4.

A control region in which the PDCCH for notifying the terminal device 2 of the DCI is placed is not notified of, and the terminal device 2 detects the DCI for the terminal device 2 through blind decoding (blind detection). Specifically, the terminal device 2 monitors a set of PDCCH candidates in the serving cell. The monitoring indicates that decoding is attempted in accordance with all the DCI formats to be monitored for each of the PDCCHs in the set. For example, the terminal device 2 attempts to decode all aggregation levels, PDCCH candidates, and DCI formats which are likely to be transmitted to the terminal device 2. The terminal device 2 recognizes the DCI (PDCCH) which is successfully decoded (detected) as the DCI (PDCCH) for the terminal device 2.

A cyclic redundancy check (CRC) is added to the DCI. The CRC is used for the DCI error detection and the DCI blind detection. A CRC parity bit (CRC) is scrambled using the RNTI (Radio Network Temporary Identifier). The terminal device 2 detects whether or not it is a DCI for the terminal device 2 on the basis of the RNTI. Specifically, the terminal device 2 performs de-scrambling on the bit corresponding to the CRC using a predetermined RNTI, extracts the CRC, and detects whether or not the corresponding DCI is correct.

The RNTI is specified or set in accordance with a purpose or a use of the DCI. The RNTI includes C-RNTI (Cell-RNTI), SPS C-RNTI (Semi Persistent Scheduling C-RNTI), SI-RNTI (System Information-RNTI), P-RNTI (Paging-RNTI), RA-RNTI (Random Access-RNTI), TPC-PUCCH-RNTI (Transmit Power Control-PUCCH-RNTI), TPC-PUSCH-RNTI (Transmit Power Control-PUSCH-RNTI), temporary C-RNTI, M-RNTI (MBMS (Multimedia Broadcast Muticast Services) -RNTI), and eIMTA-RNTI.

The C-RNTI and the SPS C-RNTI are RNTIs which are specific to the terminal device 2 in the base station device 1 (cell), and serve as identifiers identifying the terminal device 2. The C-RNTI is used for scheduling the PDSCH or the PUSCH in a certain subframe. The SPS C-RNTI is used to activate or release periodic scheduling of resources for the PDSCH or the PUSCH. A control channel having a CRC scrambled using the SI-RNTI is used for scheduling a system information block (SIB). A control channel with a CRC scrambled using the P-RNTI is used for controlling paging. A control channel with a CRC scrambled using the RA-RNTI is used for scheduling a response to the RACH. A control channel having a CRC scrambled using the TPC-PUCCH-RNTI is used for power control of the PUCCH. A control channel having a CRC scrambled using the TPC-PUSCH-RNTI is used for power control of the PUSCH. A control channel with a CRC scrambled using the temporary C-RNTI is used by a mobile station device in which no C-RNTI is set or recognized. A control channel with CRC scrambled using the M-RNTI is used for scheduling the MBMS. A control channel with a CRC scrambled using the eIMTA-RNTI is used for notification of information related to a TDD UL/DL setting of a TDD serving cell in dynamic TDD (eIMTA). Further, the DCI format may be scrambled using a new RNTI instead of the above RNTI.

Scheduling information (the downlink scheduling information, the uplink scheduling information, and the sidelink scheduling information) includes information for scheduling in units of resource blocks or resource block groups as the scheduling of the frequency region. The resource block group is successive resource block sets and indicates resources allocated to the scheduled terminal device. A size of the resource block group is decided in accordance with a system bandwidth.

### <Details of Multicarrier Transmission According to Present Embodiment>

A plurality of cells is set for the terminal device 2, and the terminal device 2 can perform multicarrier transmission. Communication in which the terminal device 2 uses a plurality of cells is referred to as carrier aggregation (CA) or dual connectivity (DC). Contents described in the present embodiment can be applied to each or some of a plurality of cells set in the terminal device 2. The cell set in the terminal device 2 is also referred to as a serving cell.

In the CA, a plurality of serving cells to be set includes one primary cell (PCell) and one or more secondary cells (SCell). One primary cell and one or more secondary cells can be set in the terminal device 2 that supports the CA.

The primary cell is a serving cell in which the initial connection establishment procedure is performed, a serving cell that the initial connection re-establishment procedure is started, or a cell indicated as the primary cell in a handover procedure. The primary cell operates with a primary frequency. The secondary cell can be set after a connection is constructed or reconstructed. The secondary cell operates with a secondary frequency. Further, the connection is also referred to as an RRC connection.

The DC is an operation in which a predetermined terminal device 2 consumes radio resources provided from at least two different network points. The network point is a master base station device (a master eNB (MceNB)) and a secondary base station device (a secondary eNB (SeNB)). In the dual connectivity, the terminal device 2 establishes an RRC connection through at least two network points. In the dual connectivity, the two network points may be connected through a non-ideal backhaul.

In the DC, the base station device 1 which is coupled to at least an S1-MME and plays a role of a mobility anchor of a core network is referred to as a master base station device. Further, the base station device 1 which is not the master base station device providing additional radio resources to the terminal device 2 is referred to as a secondary base station device. A group of serving cells associated with the master base station device is also referred to as a master cell group (MCG). A group of serving cells associated with the secondary base station device is also referred to as a secondary cell group (SCG).

In the DC, the primary cell belongs to the MCGC. Further, in the SCG, the secondary cell corresponding to the primary cell is referred to as a primary secondary cell (PSCell). A function (capability and performance) equivalent to the PCell (the base station device constituting the PCell) may be supported by the PSCell (the base station device that configures the PSCell). Further, the PSCell may only support some functions of the PCell. For example, the PSCell may support a function of performing the PDCCH transmission using the search space different from the CSS or the USS. Further, the PSCell may constantly be in an activation state. Further, the PSCell is a cell that can receive the PUCCH.

In the DC, a radio bearer (a date radio bearer (DRB)) and/or a signaling radio bearer (SRB) may be individually allocated through the MeNB and the SeNB. A duplex mode may be set individually in each of the MCG (PCell) and the SCG (PSCell). The MCG (PCell) and the SCG (PSCell) may not necessarily be synchronized with each other. A parameter (a timing advance group (TAG)) for adjusting a plurality of timings may be independently set in the MCG (PCell) and the SCG (PSCell). In the dual connectivity, the terminal device 2 transmits the UCI corresponding to the cell in the MCG only through MeNB (PCell) and transmits the UCI corresponding to the cell in the SCG only through SeNB (pSCell). In the transmission of each UCI, the transmission method using the PUCCH and/or the PUSCH is applied in each cell group.

The PUCCH and the PBCH (MIB) are transmitted only through the PCell or the PSCell. Further, the PRACH is transmitted only through the PCell or the PSCell as long as a plurality of TAGs are not set between cells in the CG.

In the PCell or the PSCell, semi-persistent scheduling (SPS) or discontinuous transmission (DRX) may be performed. In the secondary cell, the same DRX as the PCell or the PSCell in the same cell group may be performed.

In the secondary cell, information/parameter related to a setting of MAC is basically shared with the PCell or the PSCell in the same cell group. Some parameters may be set for each secondary cell. Some timers or counters may be applied only to the PCell or the PSCell.

In the CA, a cell to which the TDD scheme is applied and a cell to which the FDD scheme is applied may be aggregated. In a case where the cell to which the TDD is applied and the cell to which the FDD is applied are aggregated, the present disclosure can be applied to either the cell to which the TDD is applied or the cell to which the FDD is applied.

The terminal device 2 transmits information indicating a combination of bands in which the CA is supported by the terminal device 2 to the base station device 1. The terminal device 2 transmits information indicating whether or not simultaneous transmission and reception are supported in a plurality of serving cells in a plurality of different bands for each of band combinations to the base station device 1.

### <Self-Contained Transmission>

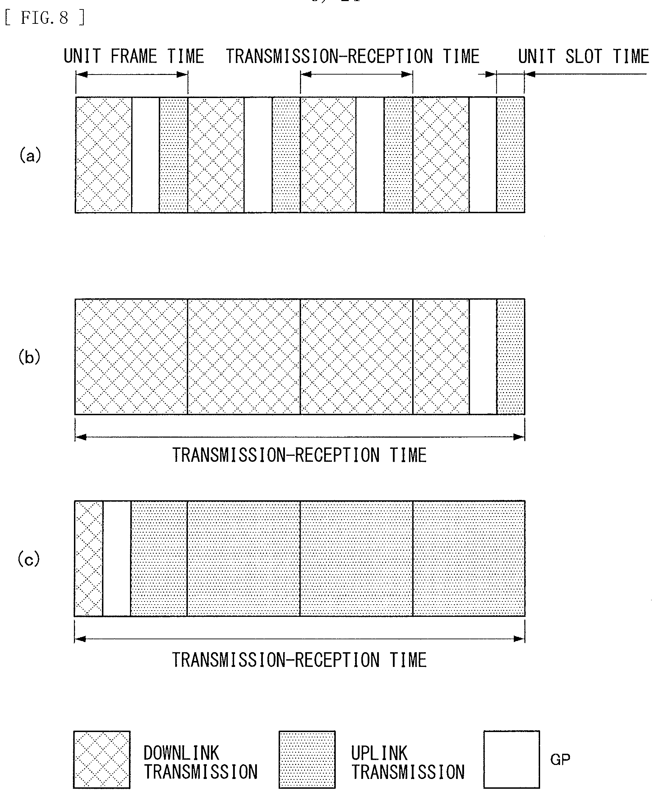

In NR, a physical channel and/or a physical signal can be transmitted by self-contained transmission. FIG. 8 illustrates an example of a frame configuration of the self-contained transmission in the present embodiment. In the self-contained transmission, single transmission-reception includes successive downlink transmission, a GP, and successive downlink transmission from the head in this order. The successive downlink transmission includes at least one piece of downlink control information and the DMRS. The downlink control information gives an instruction to receive a downlink physical channel included in the successive downlink transmission and to transmit an uplink physical channel included in the successive uplink transmission. In a case where the downlink control information gives an instruction to receive the downlink physical channel, the terminal device 2 attempts to receive the downlink physical channel on the basis of the downlink control information. Then, the terminal device 2 transmits success or failure of reception of the downlink physical channel (decoding success or failure) by an uplink control channel included in the uplink transmission allocated after the GP. In contrast, in a case where the downlink control information gives an instruction to transmit the uplink physical channel, the uplink physical channel transmitted on the basis of the downlink control information is included in the uplink transmission to be transmitted. In this way, by flexibly switching between transmission of uplink data and transmission of downlink data by the downlink control information, it is possible to take countermeasures instantaneously to increase or decrease a traffic ratio between an uplink and a downlink. Further, by notifying of the success or failure of the reception of the downlink by the uplink transmission immediately after the success or failure of reception of the downlink, it is possible to realize low-delay communication of the downlink.

A unit slot time is a minimum time unit in which downlink transmission, a GP, or uplink transmission is defined. The unit slot time is reserved for one of the downlink transmission, the GP, and the uplink transmission. In the unit slot time, not both the downlink transmission and the uplink transmission are included. The unit slot time may be a minimum transmission time of a channel associated with the DMRS included in the unit slot time. One unit slot time is defined as, for example, an integer multiple of a sampling interval (Ts) or the symbol length of NR.

The unit frame time may be a minimum time designated by scheduling. The unit frame time may be a minimum unit in which a transport block is transmitted. The unit slot time may be a maximum transmission time of a channel associated with the DMRS included in the unit slot time. The unit frame time may be a unit time in which the uplink transmission power in the terminal device 2 is decided. The unit frame time may be referred to as a subframe. There are three types in the unit frame time, including only the downlink transmission, only the uplink transmission, and a combination of the uplink transmission and the downlink transmission. One unit frame time is defined as, for example, an integer multiple of the sampling interval (Ts), the symbol length, or the unit slot time of NR.

A transmission-reception time is one transmission-reception time. A time (a gap) in which neither the physical channel nor the physical signal is transmitted occupies between one transmission-reception and another transmission-reception. The terminal device 2 may not average CSI measurement in different transmissions/receptions. The transmission-reception time may be referred to as TTI. One transmission-reception time is defined as, for example, an integer multiple of the sampling interval (Ts), the symbol length, the unit slot time, or the unit frame time of NR.

### <Non-Orthogonal Multiple Access (NOMA)>

In orthogonal multiple access (OMA) transmission, transmission and reception are performed using a frequency axis and a time axis which are orthogonal to each other, for example. At this time, the frame configuration of a frequency and time resource is determined by the subcarrier interval, and it is difficult to use resources larger than or equal to the number of resource elements. In contrast, in NOMA transmission, the frame structure is determined by adding a non-orthogonal axis in addition to the orthogonal frequency axis and the time axis. Examples of the non-orthogonal axis include an Interleave pattern axis, a Spreading Pattern axis, a Scrambling Pattern axis, a Codebook axis, and a Power axis.

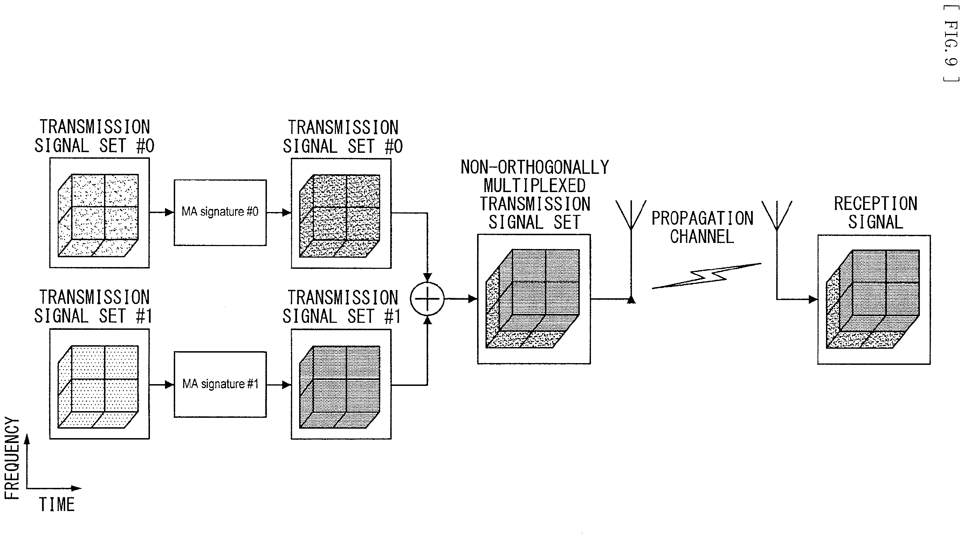

For example, FIG. 9 is an explanatory diagram for explaining an outline of an example of the NOMA transmission, in which transmission signal is multiplexed on the non-orthogonal axis in a transmission device, and resources multiplexed on the non-orthogonal axis all represent the same parameter sets. The transmission device represents either the base station device 1 or the terminal device 2. In the transmission device, a plurality of transmission signal sets to be multiplexed is prepared. In FIG. 9, it is assumed that two transmission signal sets are multiplexed. Although two sets are used here, three or more transmission signal sets may be used. Also, each of the transmission signal sets may be a transmission signal for a separate reception device or a transmission signal for the same reception device. Here, the reception device represents either the base station device 1 or the terminal device 2. To each of the transmission signal sets, a corresponding Multiple Access (MA) signature is applied. Here, the MA signature includes, for example, Interleave pattern, Spreading Pattern, Scrambling Pattern, Codebook, Power Allocation, Repetition, and the like. In addition, although it is referred to herein as a MA signature, it may simply be referred to as Pattern or Index, and as examples, it refers to identifiers such as Pattern and Index used in the above-mentioned NOMA transmission, and Pattern itself. The signals after MA signature application are multiplexed on the same frequency and time resource and sent to the same antenna port.

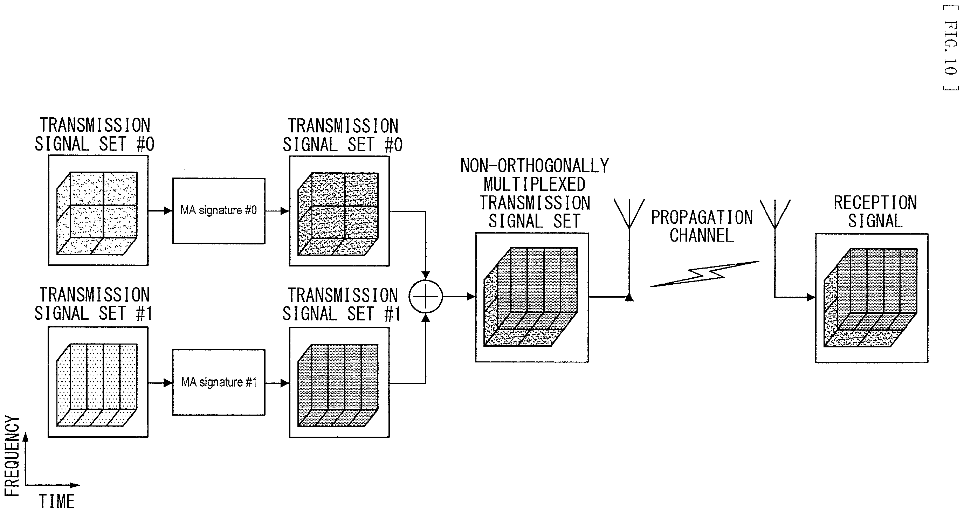

In FIG. 9, the transmission signal sets of the same parameter set are multiplexed, but as illustrated in FIG. 10, the transmission signal sets of different parameter sets may be multiplexed. FIG. 10 is an explanatory diagram for explaining an outline of another example of NOMA transmission, and is similar to FIG. 9 except that the transmission signal sets of different parameter sets are multiplexed.

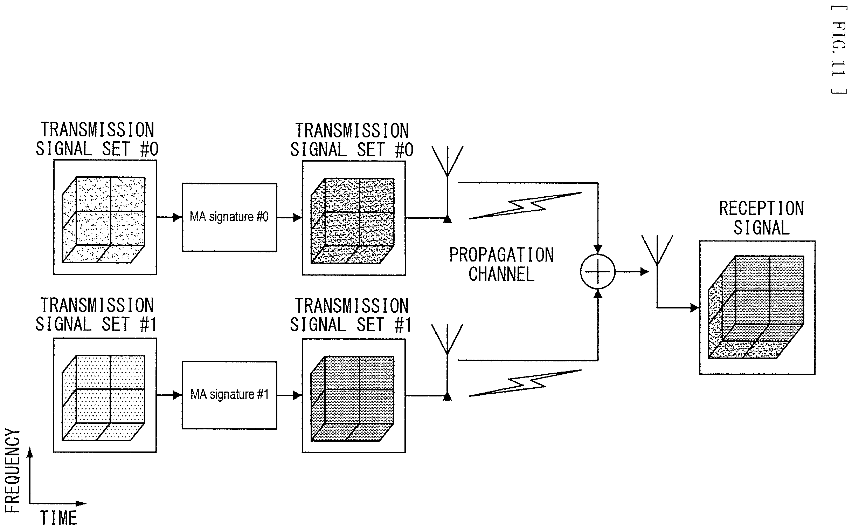

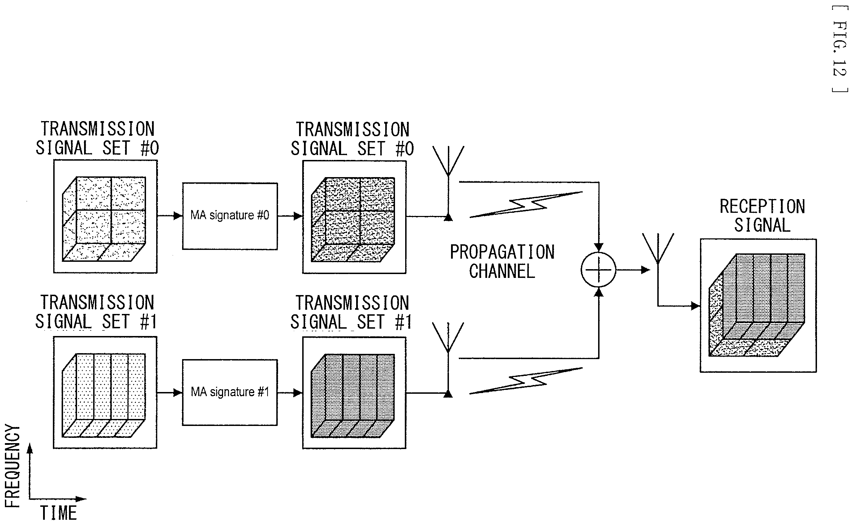

Alternatively, as illustrated in FIG. 11 and FIG. 12, it is also conceivable to transmit signals to which MA signature is applied without multiplexing in the transmission device, and to transmit signals so as to be non-orthogonally multiplexed in the reception device. FIG. 11 and FIG. 12 are each an explanatory diagram for explaining an outline of another example of the NOMA transmission, and illustrates an example in which multiplexing by the transmission device is not performed. In the examples illustrated in FIGS. 11 and 12, the corresponding MA signatures are applied to the respective transmission signal sets. Here, the MA signature includes, for example, Interleave pattern, Spreading Pattern, Scrambling Pattern, Codebook, Power Allocation, Repetition, and the like. The signals after MA signature application are transmitted on the same frequency and time resource and multiplexed through propagation channels. In this case, the respective transmission signal sets may be transmitted from separate transmission devices. Also, as illustrated in FIG. 12, the transmission signal parameter sets transmitted on the same frequency and time resource may be different parameter sets.

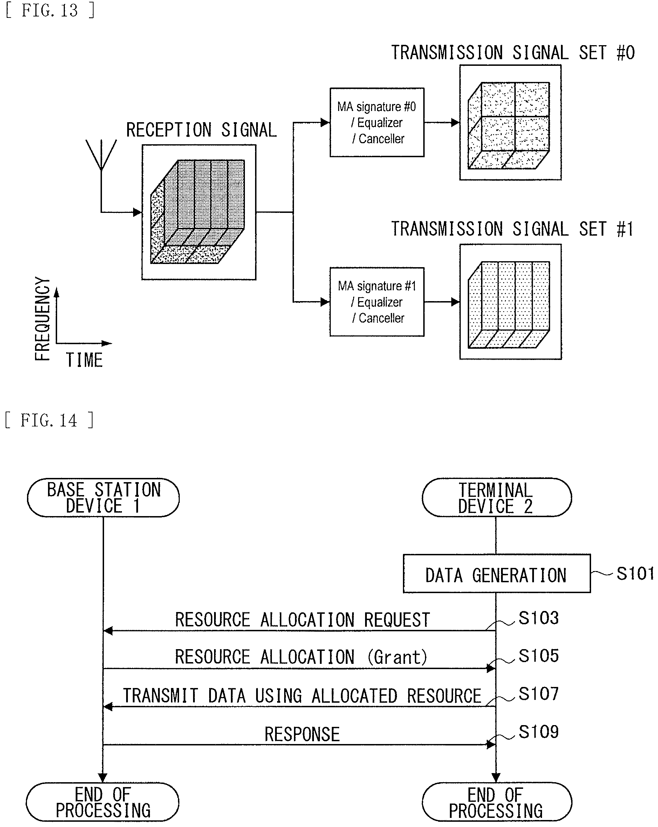

FIG. 13 is an explanatory diagram for explaining an outline of an example of the NOMA transmission, and illustrates an example of the reception device. As illustrated in FIG. 13, the reception signal is received in a state in which a plurality of transmission signals are multiplexed on the same frequency and time resources. In the reception device, to decode the multiplexed transmission signal sets, the MA signature applied at the transmitter is applied, and a desired signal is extracted by channel-equalization and interfering signal canceller. At this time, in a case where the same MA signature is used and multiplexed, the effect of interference between the multiplexed signals may become large, and decoding may become difficult.

As described above, in the NOMA transmission, it is necessary that the MA signature applied in the transmission device and the reception device be shared between the transmission device and the reception device, and the MA signature be applied without overlapping. Hereinafter, the resource includes the MA signature as one of the resources. Here, a resource including all of the frequency, time, and MA signature may be referred to as a Multiple Access (MA) resource, and a resource including only frequency and time may be referred to as a Multiple Access (MA) Physical resource.

### <Grant-Free Transmission>

The Grant-free transmission indicates that the terminal device 2 transmits using an appropriate resource from available frequency and time resources instructed in advance from the base station device 1 without the terminal device 2 receiving a dynamic resource Grant from the base station device 1. The Grant-free transmission represents data transmission performed on Downlink Control Information without including Grant. The Grant-free transmission is also referred to as data transmission without grant or the like, but will be referred to as Grant-free transmission for the sake of convenience in the following explanation. In the Grant-free transmission, the base station device 1 may designate in advance frequency and time resource candidates which the terminal device 2 is able to select.

As main objects of applying the Grant-free transmission, there are given reduction in power consumption of the terminal device 2 and low-delay communication by reducing the signaling overhead. In an existing system, the base station device 1 notifies the terminal device 2 of the resource used in the uplink or sidelink, so it has been possible to perform communication without resource conflict with another terminal device 2. However, in the existing system, the signaling overhead due to the notification may occur.

For example, FIG. 14 is an explanatory diagram for explaining an outline of Grant-based transmission. In the Grant-based transmission illustrated in FIG. 14, when data is generated (S101), the terminal device 2 transmits a resource allocation request to the base station device 1 (S103). The base station device 1 receives the resource allocation request from the terminal device 2, and allocates a resource to the terminal device 2 (S105). The terminal device 2 then transmits the data using the resource allocated by the base station device 1 (S107). The base station device 1 transmits, upon receiving the data transmitted by the terminal device 2, a response (for example, ACK/NACK) to the terminal device 2 (S109). With such a configuration, in the Grant-based transmission, a signaling overhead occurs associated with the resource allocation request from the terminal device 2 and the resource allocation by the base station device 1.

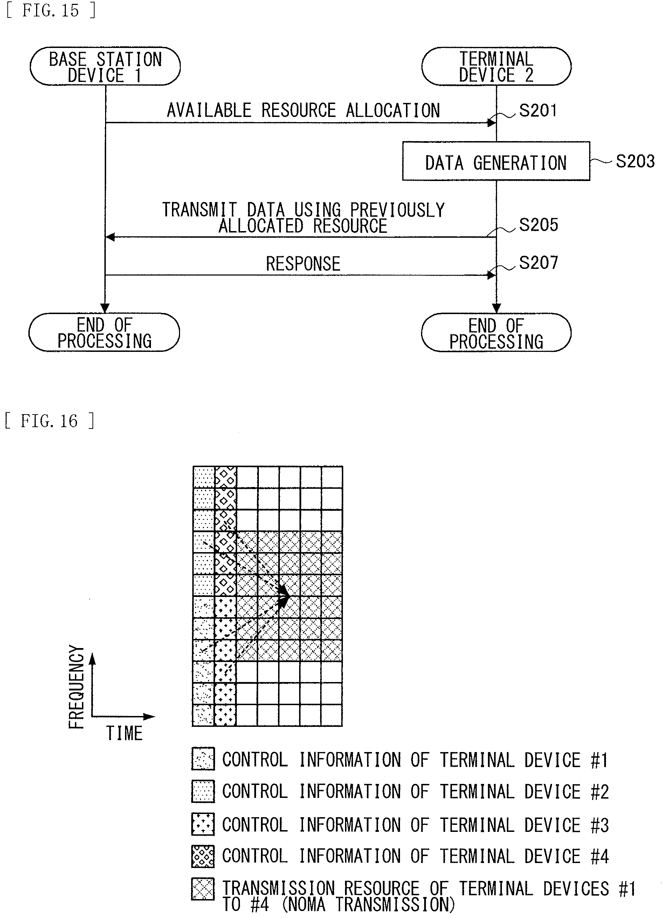

In contrast, FIG. 15 is an explanatory diagram for explaining an outline of the Grant-free transmission. In the Grant-free transmission illustrated in FIG. 15, available resources are allocated in advance by the base station device 1 to the terminal device 2 (S201). When data is generated (S203), the terminal device 2 transmits the data to the base station device 1 using an arbitrarily selected resource from the previously allocated resources (S205). Upon receiving the data transmitted from the terminal device 2, the base station device 1 transmits a response (for example, ACK/NACK) to the terminal device 2 (S207). As described above, in the Grant-free transmission, processes related to the resource allocation request from the terminal device 2 and the resource allocation by the base station device 1, as in the Grant-based transmission illustrated in FIG. 14, are omitted. Therefore, in the power saving and low-delay communication required in the next-generation communication, the Grant-free transmission of not performing the resource-allocation notification is expected to be a promising technical candidate. The transmission resource in the Grant-free transmission may be selected from all available bands, or may be selected from resources designated in advance from the base station device 1.

Subsequently, an example of a technique for making it possible to improve the efficiency of notification of control information will be described below.

### (Case of Grant-Based with NOMA)

First, an example of a case of Grant-based NOMA transmission will be described. In the NOMA transmission, multiple terminal devices perform transmission using frequency/time resources, all or part of which are the same. For example, FIG. 16 is an explanatory diagram for explaining an example of an operation related to notification of resource allocation information in the Grant-based NOMA transmission, and illustrates an example in which all four terminal devices (i.e., terminal devices #1 to #4) perform NOMA transmission using the same frequency/time resources. In the Grant-based NOMA transmission, for example, as illustrated in FIG. 16, the same frequency/time resource allocation information is notified as control information of each of the four terminal devices. Further, in a case where the number of terminal devices to be multiplexed is further increased, the number of pieces of control information for notifying the same frequency/time resource allocation information is also increased, and it is considered that the overhead is increased.

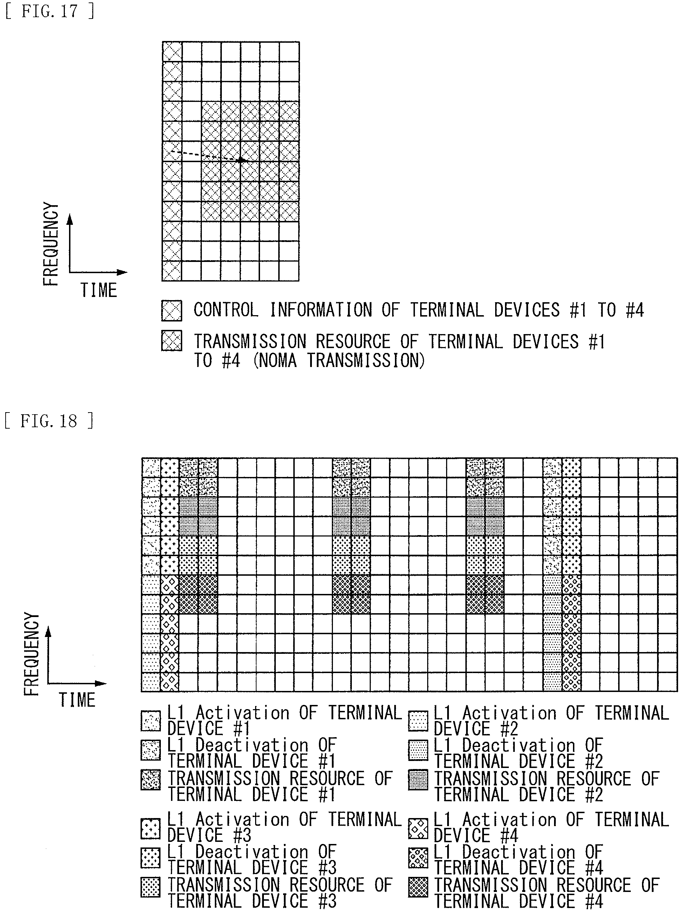

As a means for solving the above, for example, an example illustrated in FIG. 17 can be given. FIG. 17 is an explanatory diagram for explaining an example of technology in which a system according to the present embodiment makes it possible to efficiently notify control information, and illustrates an example of an operation related to notification of the resource allocation information. In the example illustrated in FIG. 17, pieces of control information of a plurality of terminal devices (e.g., terminal devices #1 to #4) are grouped as one piece of control information. Specifically, pieces of resource block allocation information are grouped together, and pieces of individual terminal device information are individually notified, thereby enabling reduction of control information. In addition to the resource block allocation information, if pieces of information are common to the plurality of terminal devices, the pieces of information can be grouped as the same information. Examples of pieces of information that can be grouped as the information common to the plurality of terminal devices include Preemption Indication, SRS request, and the like. Examples are not limited to those, and other information may be grouped together.

Note that, since the control information illustrated in FIG. 17 also includes information individually notified to the terminal device (for example, information specific to the terminal device), it is necessary that each terminal device recognize where information addressed to itself is placed. In view of such circumstances, for example, the terminal device may be notified in advance in a semi-static manner where the information addressed to the relevant terminal device is placed. Further, as another example, each terminal device may calculate and derive, from its own RNTI or the like, where information addressed to itself is placed. In addition, pieces of information including the number of pieces of terminal device information included in the control information, and the size of the control information, are also important. For example, the size of the control information may be determined in accordance with the number of terminal devices to which the control information is commonly notified. Further, those pieces of information are also effective in the following examples.

### (Case of SPS transmission)

Next, an example of a case of Semi-Persistent Scheduling (SPS) transmission will be described. For example, FIG. 18 is an explanatory diagram for explaining an example of an operation related to notification of the resource allocation information in the SPS transmission. In the SPS transmission as illustrated in FIG. 18, resources (e.g., resource pools) are allocated semi-statically, and the terminal device communicates through the resources. Specifically, the terminal device transmits data at regular intervals after receiving an L1 Activation control signal. The L1 Activation signal may include, for example, information necessary for the SPS transmission, in addition to the time notification for starting (i.e., enabling) periodic data transmissions. Examples of the information include information related to the transmission resource on the time axis and the frequency axis, Configuration information on reference signals, information related to Modulation and Coding Scheme (MCS), Transport Block Size (TBS), and Hybrid ARQ (HARQ), and Repetition count. Note that the information included in the L1 Activation signal is not necessarily limited to the above-mentioned examples as long as the information is necessary for the SPS transmission.

An L1 Deactivation control signal may be used as the control information for stopping (i.e., disabling) the SPS transmission. The terminal device receiving the L1 Deactivation control signal stops the SPS transmission.

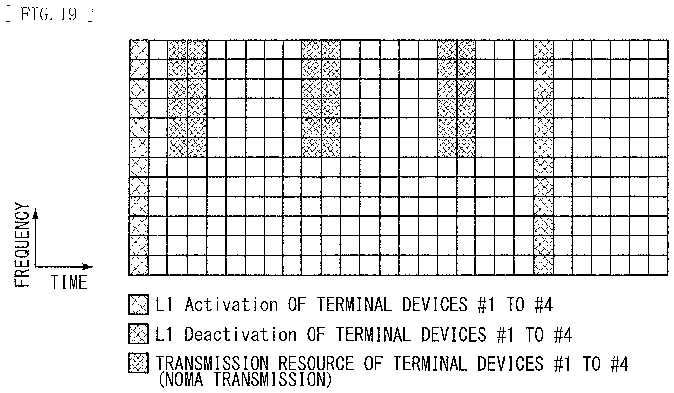

For example, a method of combining NOMA with the SPS transmission may be assumed. The existing SPS transmission generally allocates time/frequency resources to be orthogonal between terminal devices, in order to maintain orthogonality between the terminal devices. By applying the NOMA here, further improvement in the frequency utilization efficiency can be expected. For example, FIG. 19 is an explanatory diagram for explaining an example of technology in which a system according to the embodiment makes it possible to efficiently notify control information, and illustrates an example of an operation related to notification of the resource allocation information. Specifically, as illustrated in FIG. 19, the plurality of terminal devices (i.e., terminal devices #1 to #4) are allocated to the same time/frequency resources and multiplexed. The timing of starting (i.e., enabling) the SPS transmission (L1 Activation transmission) and the timing of stopping (i.e., disabling) the SPS transmission (L1 Deactivation transmission) may be individual between the multiplexing terminal devices, but may also be simultaneous.

In a case where the terminal devices individually perform starting and stopping of the SPS transmission, there is an example in which notification is performed by scrambled DCI using an SPS transmission identifier (for example, SPS C-RNTI (SPS Cell-Radio Network Temporary Identifier)) for each terminal device. The scrambling may be CRC scrambling, or data scrambling.

Alternatively, in a case where the plurality of terminal devices simultaneously start/stop the SPS transmission, and in a case where notification is made by DCIs to each terminal device, it can be assumed that the amount of transmission resources for transmitting the control information increases as the number of terminal devices increases.

Accordingly, it is conceivable to reduce the number of transmission resources for transmitting the control information by setting multiplexed terminal devices as one group and setting an identifier for the relevant group. In the following description, for the sake of convenience, the identifier for each group is referred to as SPS G-RNTI, but the name of the relevant identifier is not necessarily limited. Further, information substantially similar to the identifier for each group can be applied instead of the relevant identifier.

The SPS G-RNTI may be set semi-statically for the terminal device that performs the SPS transmission. Here, the same SPS G-RNTI may be allocated to the plurality of terminal devices performing the SPS transmission each using the same time/frequency resource, or the SPS G-RNTI may be allocated to the time/frequency resource. In a case where the SPS G-RNTI is allocated to the time/frequency resource, the SPS G-RNTI allocated to the time/frequency resource is semi-statically notified to the terminal device performing the SPS transmission. In other words, the terminal device performing the SPS transmission via the time/frequency resource to which the SPS G-RNTI is allocated may be set to the group corresponding to the SPS G-RNTI. The DCI scrambled using the SPS G-RNTI (CRC or data scrambled DCI) include, for example, information common to the terminal devices multiplexed with the same time/frequency resource, and the terminal device individual information. As a specific example, the information common to the multiplexed terminal devices includes information related to time/frequency resource. Further, the terminal device individual information includes information of DMRS, MCS, and the like. However, the above description is merely an example, and the common information and the terminal device individual information are not necessarily limited to those examples.

As described above, by notifying the terminal devices multiplexed with the same time/frequency resource with the same DCI, the transmission resources used for transmission of control signals may be reduced.

In addition, although the above explanation has been given on the case where the notification is made to the terminal devices multiplexed with the same time/frequency resource, the method of setting the terminal devices to the group is not limited as long as the plurality of terminal devices is set to the group and the control information is notified in units of the group. That is, the plurality of terminal devices set in the same group does not necessarily have to share the same time/frequency resource. Also, information notified as the control information to the plurality of terminal devices is not particularly limited. For example, as the control information, information such as preemption for temporarily restricting the use of a part of resources may be notified to the group, so that the information may be notified to the plurality of terminal devices set in the group.

In the above description, the case of applying NOMA has been described, but a case is assumed in which the same time/frequency resource is allocated to the plurality of terminal devices without applying NOMA in the SPS transmission (i.e., radio communication in which a resource is shared between the plurality of terminal devices). As a specific example, a case may be assumed in which a data generation frequency of the terminal devices to be multiplexed is relatively small. For example, in the case where the frequency of data generation is low, if a dedicated resource for SPS transmission is allocated to a terminal device, a resource in which no transmission is performed and which remains unused may occur with a higher probability. Such a situation may also cause a reduction in resource utilization efficiency. In view of such a situation, for example, the same SPS transmission resource may be allocated to the plurality of terminal devices with a low frequency of data generation. As a result, although there is a possibility that data transmission collisions may occur between terminal device data transmissions, resource utilization efficiency can be improved. Even in such cases, since it is possible to handle the plurality of terminal devices to which the same SPS transmission resource is allocated as the group, it is possible to apply the similar process as the process of the above embodiment.

### (Case of Grant-Free Transmission)

Next, an example of a case of Grant-free transmission will be described. In the Grant-free transmission, the terminal device transmits data using the control data set by RRC Signaling. The control information set by the RRC Signaling includes, for example, information related to a periodically allocated transmission resource (such as time/frequency resource information and Offset information of starting timings), Configuration information related to a reference signal, information related to Modulation and Coding Scheme (MCS), Transport Block Size (TBS), Repetition count, and Power Control, information related to Hybrid ARQ (HARQ), and the like. The control information set by the RRC Signaling is not necessarily limited to the above-mentioned examples as long as the information is necessary for the Grant-free transmission.

In the Grant-free transmission, by combining NOMA as described in the SPS transmission, the plurality of terminal devices may be multiplexed with the same time/frequency resource, or the plurality of terminal devices may be multiplexed with the same time/frequency resource without applying NOMA.

In the Grant-free transmission, the Grant-free transmission can be started (i.e., enabled) on the basis of the information set in the RRC Signaling. Therefore, the L1 Activation signals such as those in the above-mentioned SPS transmission are not necessarily required. In contrast, it is assumed that the L1 control signal is transmitted in order to update the information set in the RRC Signaling. In the following explanation, for the sake of convenience, the L1 control signal for updating the information set by the RRC Signaling is also referred to as a L1 Modification DCI.

In a case where updating of a transmission parameter or the like is performed individually for the terminal devices, it can be assumed that notification is performed by scrambled L1 Modification DCI using the SPS transmission identifier (for example, SPS C-RNTI (SPS Cell-Radio Network Temporary Identifier)) for each terminal device. The scrambling may be CRC scrambling, or data scrambling. Alternatively, in a case where the parameter is updated simultaneously for the plurality of terminal devices, and in the case where the L1 Modification DCI is notified to each terminal device, it can be assumed that the amount of transmission resources for transmitting the control information increases as the number of terminal devices increases.

In view of such circumstances, it is conceivable to reduce the number of transmission resources for transmitting the control information by setting multiplexed terminal devices as one group and setting an identifier for the relevant group. In the following description, for the sake of convenience, the identifier for each group is referred to as Grant-free G-RNTI, but the name of the relevant identifier is not necessarily limited. Further, information substantially similar to the identifier for each group can be applied instead of the relevant identifier.

The Grant-free G-RNTI is set semi-statically for the terminal device that performs the Grant-free transmission. Here, the same Grant-free G-RNTI may be allocated to a terminal device that performs Grant-free transmission using the same time/frequency resource, or the Grant-free G-RNTI may be allocated to the time/frequency resource. In a case where the Grant-free G-RNTI is allocated to the time/frequency resource, the Grant-free G-RNTI allocated to the time/frequency resource is semi-statically notified to the terminal device performing the Grant-free transmission. In other words, the terminal device performing the Grant-free transmission via the time/frequency resources to which the Grant-free G-RNTI is allocated may be set to the group corresponding to the Grant-free G-RNTI. The DCI scrambled using the Grant-free G-RNTI (CRC or data scrambled DCI) include, for example, information common to the terminal devices multiplexed with the same time/frequency resource, and the terminal device individual information. As a specific example, information common to the multiplexed terminal devices includes information related to the time/frequency resource. Further, the terminal device individual information includes information of DMRS, MCS, and the like. However, the above description is merely an example, and the common information and the terminal device individual information are not necessarily limited to those examples.

As described above, by notifying the terminal devices multiplexed with the same time/frequency resource with the same DCI, the transmission resources used for transmission of control signals may be reduced.

In addition, although the above explanation has been given on the case where the notification is made to the terminal devices multiplexed with the same time/frequency resource, the method of setting the terminal devices to the group is not limited as long as the plurality of terminal devices is set to the group and the control information is notified in units of the group. That is, the plurality of terminal devices set in the same group does not necessarily have to share the same time/frequency resource. Also, information notified as the control information to the plurality of terminal devices is not particularly limited. For example, as the control information, information such as preemption for temporarily restricting the use of a part of resources may be notified to the group, so that the information may be notified to the plurality of terminal devices set in the group.

### (Dynamic Adding and Deleting of Terminal Device to Group)

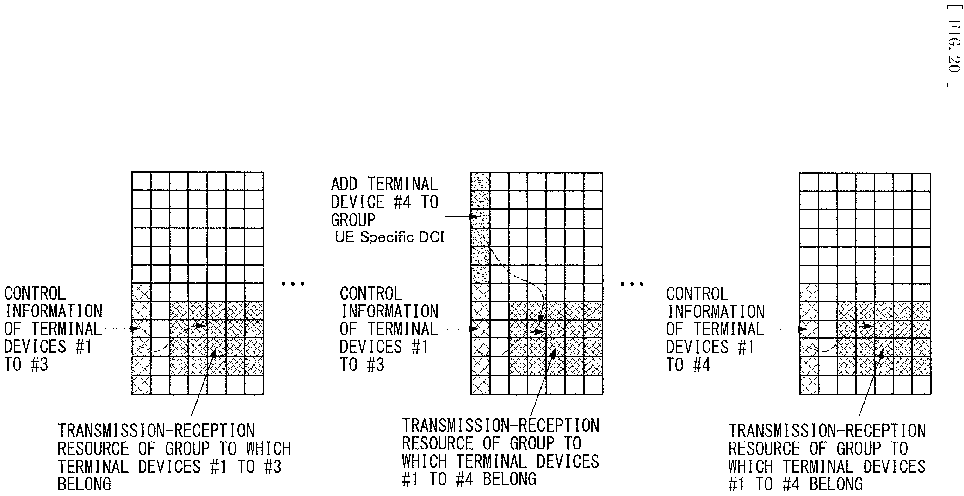

In the above-mentioned embodiment, the example is described in which the group to which the terminal device belongs is semi-statically set, but the terminal device may be dynamically added to the group, or the terminal device may be dynamically deleted from the group. For example, FIG. 20 is an explanatory diagram for explaining an example of dynamically adding/deleting a terminal device to/from a group.

For example, as illustrated on the left side of FIG. 20, it is assumed that there is a group to which terminal devices #1 to #3 belong. In such a situation, in a case where the terminal device #4 is newly added to the group as illustrated in the middle drawing of FIG. 20, UE Specific DCI instructs terminal device #4 to be added to the group. Hereinafter, as illustrated on the right side of FIG. 20, the terminal device #4 instructed to be added to the group receives control information commonly notified to the terminal devices #1 to #4 (in other words, the control information notified to the group), and performs transmission and reception using the transmission-reception resources of the group to which the terminal devices #1 to #4 belong.

Although examples of adding the terminal device to the group have been described above, the deletion of a terminal device from a group may be performed on the basis of a similar method. That is, in a case where a terminal device belonging to a group is deleted from the group, the terminal device may be notified of the deletion from the group by UE Specific DCI. As another example, a group to which the terminal device belongs may be changed on the basis of a similar method. As a specific example, it is assumed that a terminal device belonging to a group has received UE Specific DCI indicating a change to another group. In this case, the terminal device is deleted from the currently belonging group, and then belongs to the changed group notified by the UE Specific DCI.

UE Specific DCI for notifying the terminal device of a resource dedicated to UE may be notified. Based on this assumption, for example, in a case where the terminal device receives both the UE Specific DCI and group-addressed DCI, it is effective to decide in advance which of those should be given priority. For example, if the UE Specific DCI is prioritized, the terminal device ignores the group-addressed DCI and uses resources notified by the UE Specific DCI. Of course, the priority setting method is not limited to the above-mentioned example, and the DCI to be prioritized may be determined statically or semi-statically. Further, as a development of such a mechanism, in a case where a transmission-reception resource is individually allocated to the terminal device by the UE Specific DCI, the transmission-reception resource may be handled so as to mean the terminal device is to be deleted from the group implicitly. In this case, the terminal device may operate not to use the transmission-reception resource allocated to the group until the addition to the group is newly instructed. Incidentally, the control information notified to the group, such as the group-addressed DCI, corresponds to an example of "first control information". Further, the control information individually notified to the terminal device, such as the UE Specific DCI, corresponds to an example of "second control information".

### (Group RNTI)

An embodiment of the RNTI set for groups such as the SPS G-RNTI or the Grant-free G-RNTI, which has been described in the above embodiment, will be described below. For example, it is assumed that the terminal device is able to perform normal transmission and SPS transmission. In such cases, for example, it may be assumed that the RNTI applied when scrambling CRC at the transmitter varies depending on the method of transmission.

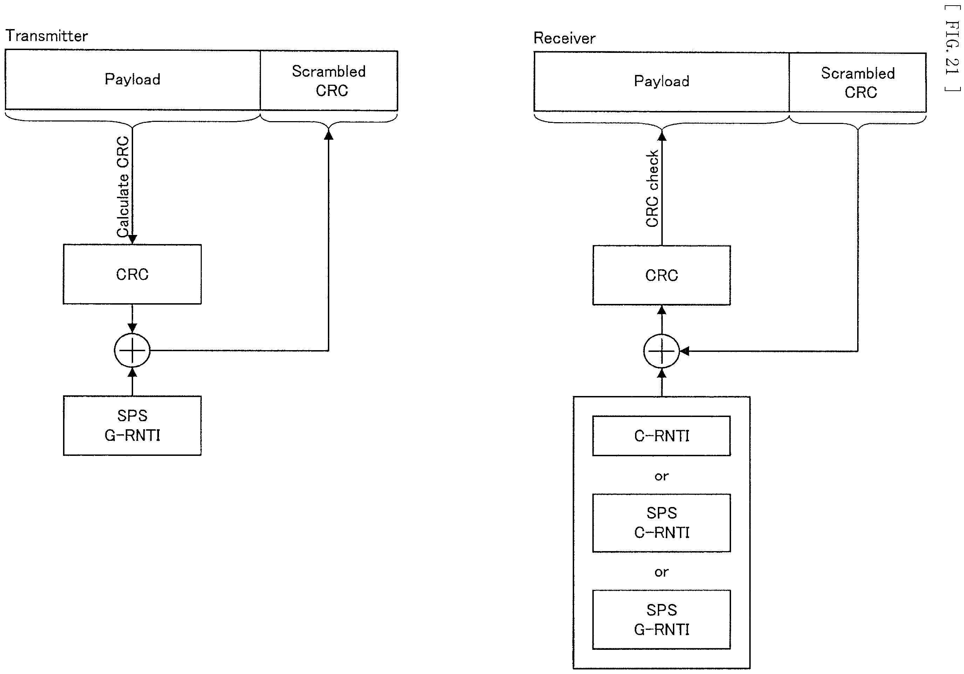

For example, FIG. 21 is an explanatory diagram for explaining an outline of an example of scrambling of DCI in a case where the SPS transmission is performed. More specifically, in a case where the SPS transmission using the same transmission resource is instructed among the plurality of terminal devices, as illustrated in FIG. 21, the base station device corresponding to the transmitter scrambles the CRC of the DCI by SPS G-RNTI and transmits the CRC. The terminal device receiving the DCI decodes the DCI, and then descrambles the CRC with each candidate RNTI, and performs CRC check. If the DCI is correctly received, the CRC check is successfully performed by descrambling the CRC by the SPS G-RNTI. If the CRC check based on the SPS G-RNTI is successful, the terminal device reads the received DCI as SPS DCI transmitted to the plurality of terminal devices.

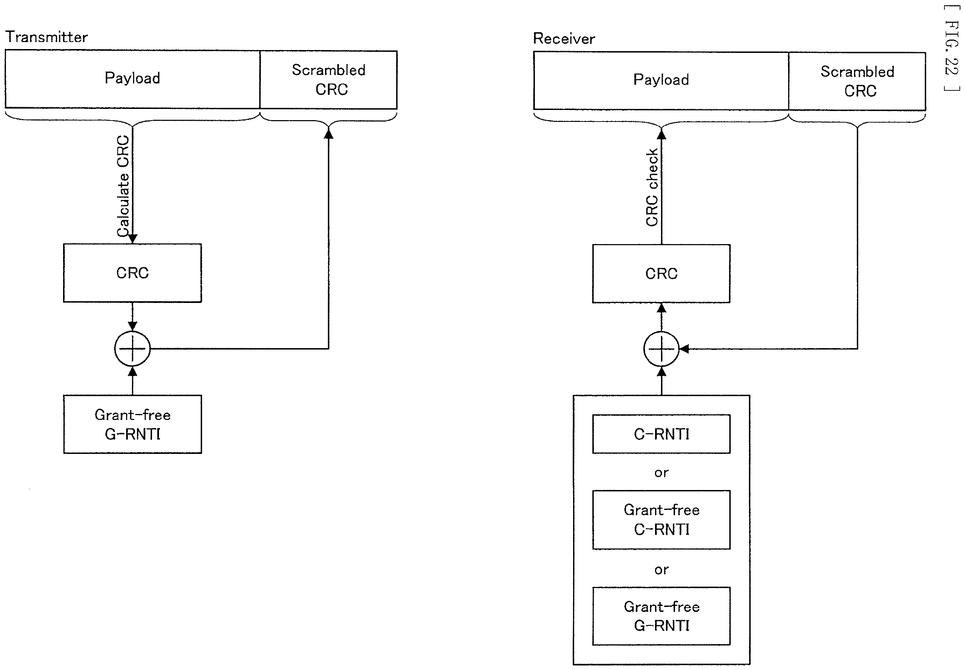

FIG. 22 is an explanatory diagram for explaining an outline of an exemplary scrambling of DCI in a case where the Grant-free transmission is performed. Note that the Grant-free transmission illustrated in FIG. 22 is substantially similar as the case of the SPS transmission, and therefore detailed descriptions thereof are omitted.

Although SPS G-RNTI and Grant-free G-RNTI are given as examples of the RNTI, the names of the corresponding identifiers are not limited to the names described above. Further, information substantially similar to the identifier for each group can be applied instead of the identifier. The RNTI candidates for descrambling the CRCs illustrated in FIG. 21 and FIG. 22 are merely examples, and are not necessarily limited to the examples illustrated in FIG. 21 and FIG. 22.

### (Minimum Unit of Resource Block Allocation)

Subsequently, an exemplary technique will be described, which makes it possible to realize more efficient DCI control information by switching a resource block allocation notification means for NOMA, in a case where NOMA is applied.

In NOMA, "Spreading" or "Repetition" may cause diffusion transmission or repetitive transmission of a single signal. In such cases, the time/frequency resources used by a single terminal device may be increased in the NOMA transmission compared with the OMA transmission. In such cases, it may be assumed that the smallest units used in the OMA transmission resource block allocation indication are too small in the NOMA transmission. It should be noted that since the NOMA transmission can multiplex the plurality of terminal devices with the same time/frequency resource, it is possible to improve or maintain the frequency utilization efficiency.

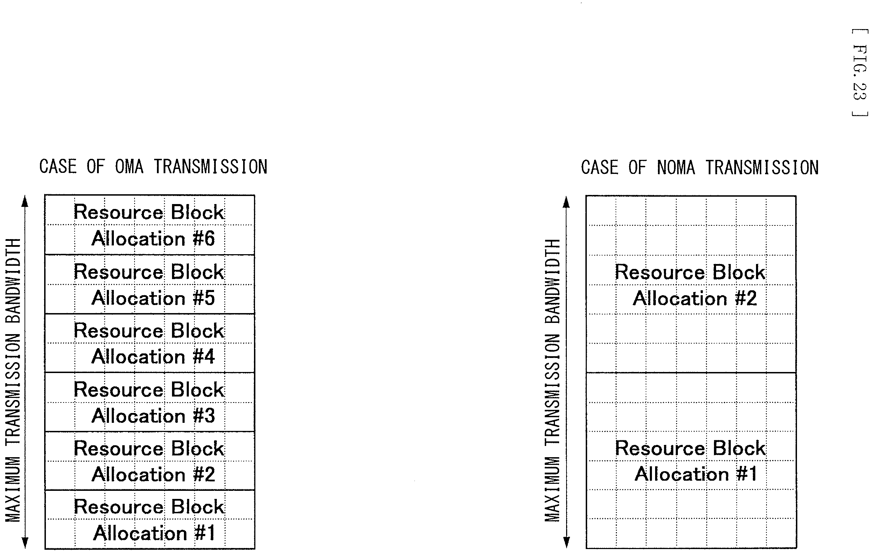

Referring now to FIG. 23, an example of resource block allocation in each of the OMA transmission and the NOMA transmission will be described. FIG. 23 is an explanatory diagram for explaining an outline of the example of the resource block allocation in each of the OMA transmission and the NOMA transmission. In the case of the OMA transmission illustrated in FIG. 23, it is assumed that six resource block allocations are allowed for the largest transmission band. Further, for the NOMA transmission, it is assumed that a three-fold spreading process is applied, for example. In this case, as illustrated in FIG. 23, if the maximum transmission bandwidth is the same as that at the time of the OMA transmission, the maximum transmission bandwidth becomes two resource block allocations, and the number of resource block candidates is reduced compared with the case of the OMA transmission. Therefore, in the example illustrated in FIG. 23, in the case of the OMA transmission, information of at least 3 bits is required for notifying the resource block allocation, whereas in the case of the NOMA transmission, it is possible to perform the notification using information of 1 bit.

In contrast, in the NOMA transmission, in addition to the resource allocation of the frequency/time axis, it is also necessary to perform notification of information of the allocation of the non-orthogonal axis by, for example, MA signature notification. Accordingly, for example, a part of a data length reserved for the notification of the control information, which is reserved by restricting the size of the data for the resource block allocation notification, may be used for the MA signature notification. For example, in the case of the example illustrated in FIG. 23, the number of resource block candidates is restricted from 6 to 2, so that the size of data for resource block allocation is restricted from 3 bits to 1 bit. By using the area of 2 bits reserved in this manner for the MA signature notification, it is possible to make the DCI Payload sizes of the OMA transmission and the NOMA transmission the same. That is, it is possible to notify the DCI without increasing the number of blind decodings regardless of the difference between the OMA transmission and the NOMA transmission.

Note that there is no particular limitation on a method of determining whether to perform switching between the OMA transmission and the NOMA transmission. As a specific example, the determination may be made based on semi-static notification. As another example, a 1-bit Flag may be newly provided, the Flag indicating one of the OMA transmission and the NOMA transmission. Alternatively, the above determination may be performed by CRC checking by individually setting the RNTI for OMA and the RNTI for NOMA and scrambling the CRC of the DCI with the corresponding RNTI. According to the above-mentioned mechanism, the DCI contents of the OMA transmission and the DCI contents of the NOMA transmission are adaptively replaced, thereby enabling more efficient notification of control data.

Various embodiments have been described above focusing on means for improving the efficiency of notification of control information. It should be noted that any one of the above-mentioned embodiments may be applied, or a plurality of embodiments may be combined and implemented. Further, in the example described above, the embodiment has been mainly described focusing on the case of applying the present disclosure to the uplink, but the application of the embodiment described above is not limited to only the uplink. As a specific example, the above-mentioned embodiment may be applied to a downlink, or may be applied to a sidelink such as Device to Device, or communication with a relay terminal.

### <<2. Application Examples>>

The technology according to an embodiment of the present disclosure can be applied to various products. For example, the base station device 1 may be realized as any type of evolved Node B (eNB) such as a macro eNB or a small eNB. The small NB may be an eNB that covers a cell, such as a pico eNB, a micro eNB, or a home (femto) eNB, smaller than a macro cell. Instead, the base station device 1 may be realized as another type of base station such as a NodeB or a base transceiver station (BTS). The base station device 1 may include a main entity (also referred to as a base station device) that controls radio communication and one or more remote radio heads (RRHs) disposed at different locations from the main entity. Further, various types of terminals to be described below may operate as the base station device 1 by performing a base station function temporarily or permanently. Moreover, at least some of the constituent elements of the base station device 1 may be realized in a base station device or a module for the base station device.

Further, for example, the terminal device 2 may be realized as a mobile terminal such as a smartphone, a tablet personal computer (PC), a notebook PC, a portable game terminal, a portable/dongle mobile router or a digital camera, or an in-vehicle terminal such as a car navigation device. Further, the terminal device 2 may be realized as a terminal that performs machine to machine (M2M) communication (also referred to as a machine type communication (MTC) terminal). Moreover, at least some of the constituent elements of the terminal device 2 may be realized in a module mounted on the terminal (for example, an integrated circuit module configured on one die).

### <2.1. Application Example Related to Base Station>

### (First Application Example)

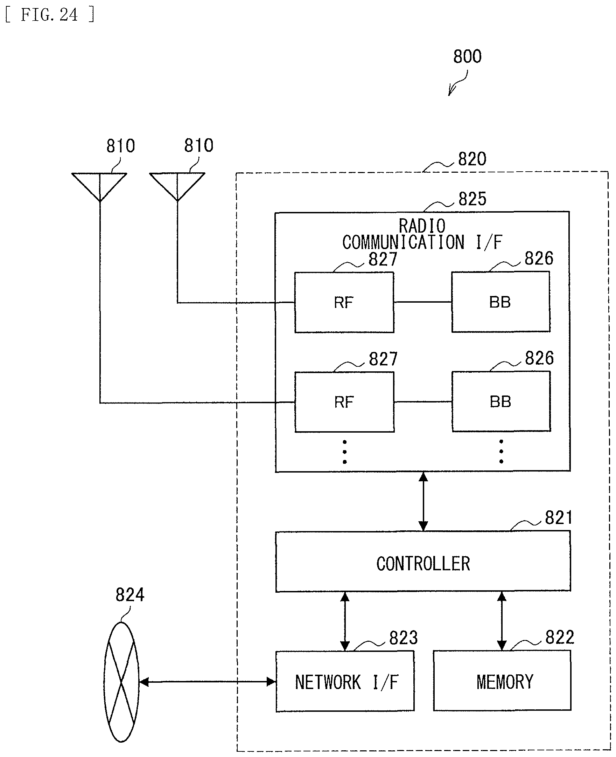

FIG. 24 is a block diagram illustrating a first example of a schematic configuration of an eNB to which the technology according to an embodiment of the present disclosure may be applied. An eNB 800 includes one or more antennas 810 and a base station device 820. Each antenna 810 and the base station device 820 may be connected to each other via an RF cable.

Each of the antennas 810 includes a single or a plurality of antenna elements (e.g., a plurality of antenna elements constituting a MIMO antenna) and is used for the base station device 820 to transmit and receive a radio signal. The eNB 800 may include the plurality of the antennas 810 as illustrated in FIG. 24, and the plurality of antennas 810 may, for example, correspond to a plurality of frequency bands used by the eNB 800. It should be noted that while FIG. 24 illustrates an example in which the eNB 800 includes the plurality of antennas 810, the eNB 800 may include the single antenna 810.

The base station device 820 includes a controller 821, a memory 822, a network interface 823, and a radio communication interface 825.

The controller 821 may be, for example, a CPU or a DSP, and operates various functions of an upper layer of the base station device 820. For example, the controller 821 generates a data packet from data in a signal processed by the radio communication interface 825, and transfers the generated packet via the network interface 823. The controller 821 may generate a bundled packet by bundling data from a plurality of base band processors to transfer the generated bundled packet. Further, the controller 821 may also have a logical function of performing control such as radio resource control, radio bearer control, mobility management, admission control, and scheduling. Further, the control may be performed in cooperation with a surrounding eNB or a core network node. The memory 822 includes a RAM and a ROM, and stores a program executed by the controller 821 and a variety of control data (such as, for example, terminal list, transmission power data, and scheduling data).

The network interface 823 is a communication interface for connecting the base station device 820 to the core network 824. The controller 821 may communicate with a core network node or another eNB via the network interface 823. In this case, the eNB 800 may be connected to a core network node or another eNB through a logical interface (e.g., S1 interface or X2 interface). The network interface 823 may be a wired communication interface or a radio communication interface for radio backhaul. In the case where the network interface 823 is a radio communication interface, the network interface 823 may use a higher frequency band for radio communication than a frequency band used by the radio communication interface 825.

The radio communication interface 825 supports a cellular communication system such as long term evolution (LTE) or LTE-Advanced, and provides radio connection to a terminal located within the cell of the eNB 800 via the antenna 810. The radio communication interface 825 may typically include a base band (BB) processor 826, an RF circuit 827, and the like. The BB processor 826 may, for example, perform encoding/decoding, modulation/demodulation, multiplexing/demultiplexing, and the like, and performs a variety of signal processing on each layer (e.g., L1, medium access control (MAC), radio link control (RLC), and packet data convergence protocol (PDCP)). The BB processor 826 may have part or all of the logical functions as described above instead of the controller 821. The BB processor 826 may be a module including a memory having a communication control program stored therein, a processor to execute the program, and a related circuit, and the function of the BB processor 826 may be changeable by updating the program. Further, the module may be a card or blade to be inserted into a slot of the base station device 820, or a chip mounted on the card or the blade. Meanwhile, the RF circuit 827 may include a mixer, a filter, an amplifier, and the like, and transmits and receives a radio signal via the antenna 810.

The radio communication interface 825 may include a plurality of the BB processors 826 as illustrated in FIG. 24, and the plurality of BB processors 826 may, for example, correspond to a plurality of frequency bands used by the eNB 800. Further, the radio communication interface 825 may also include a plurality of the RF circuits 827, as illustrated in FIG. 24, and the plurality of RF circuits 827 may, for example, correspond to a plurality of antenna elements. Note that FIG. 24 illustrates an example in which the radio communication interface 825 includes the plurality of BB processors 826 and the plurality of RF circuits 827, but the radio communication interface 825 may include the single BB processor 826 or the single RF circuit 827.

In the eNB 800 illustrated in FIG. 24, one or more constituent elements of the higher layer processor 101 and the controller 103 described with reference to FIG. 6 may be implemented in the radio communication interface 825. Alternatively, at least some of the constituent elements may be implemented in the controller 821. As one example, a module including a part or the whole of (for example, the BB processor 826) of the radio communication interface 825 and/or the controller 821 may be implemented on the eNB 800. The one or more constituent elements in the module may be implemented in the module. In this case, the module may store a program causing a processor to function as the one or more constituent elements (in other words, a program causing the processor to execute operations of the one or more constituent elements) and execute the program. As another example, a program causing the processor to function as the one or more constituent elements may be installed in the eNB 800, and the radio communication interface 825 (for example, the BB processor 826) and/or the controller 821 may execute the program. In this way, the eNB 800, the base station device 820, or the module may be provided as a device including the one or more constituent elements and a program causing the processor to function as the one or more constituent elements may be provided. In addition, a readable recording medium on which the program is recorded may be provided.

Further, in the eNB 800 illustrated in FIG. 24, the receiver 105 and the transmitter 107 described with reference to FIG. 6 may be implemented in the radio communication interface 825 (for example, the RF circuit 827). Further, the transmission-reception antenna 109 may be implemented in the antenna 810. Further, the network communication section 130 may be implemented in the controller 821 and/or the network interface 823.

### (Second Application Example)

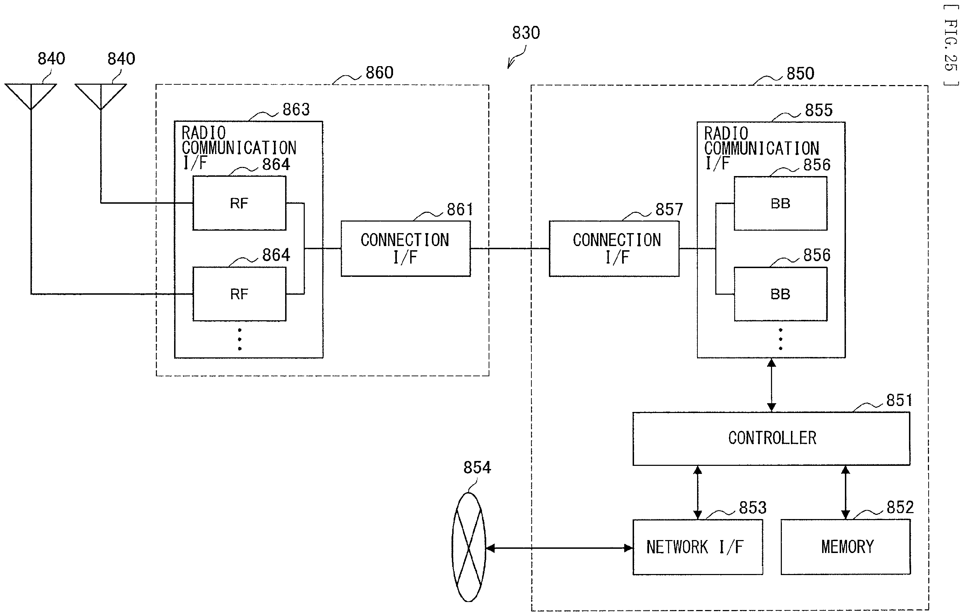

FIG. 25 is a block diagram illustrating a second example of a schematic configuration of an eNB to which the technology according to an embodiment of the present disclosure may be applied. An eNB 830 includes one or more antennas 840, a base station device 850, and an RRH 860. Each of the antennas 840 and the RRH 860 may be connected to each other via an RF cable. Further, the base station device 850 and the RRH 860 may be connected to each other by a high speed line such as optical fiber cables.

Each of the antennas 840 includes a single or a plurality of antenna elements (e.g., antenna elements constituting a MIMO antenna), and is used for the RRH 860 to transmit and receive a radio signal. The eNB 830 may include a plurality of the antennas 840 as illustrated in FIG. 25, and the plurality of antennas 840 may, for example, correspond to a plurality of frequency bands used by the eNB 830. Note that FIG. 25 illustrates an example in which the eNB 830 includes the plurality of antennas 840, but the eNB 830 may include the single antenna 840.

The base station device 850 includes a controller 851, a memory 852, a network interface 853, a radio communication interface 855, and a connection interface 857. The controller 851, the memory 852, and the network interface 853 are similar to the controller 821, the memory 822, and the network interface 823 described with reference to FIG. 24.

The radio communication interface 855 supports a cellular communication system such as LTE and LTE-Advanced, and provides radio connection to a terminal located in a sector corresponding to the RRH 860 via the RRH 860 and the antenna 840. The radio communication interface 855 may typically include a BB processor 856 or the like. The BB processor 856 is similar to the BB processor 826 described with reference to FIG. 24 except that the BB processor 856 is connected to an RF circuit 864 of the RRH 860 via the connection interface 857. The radio communication interface 855 may include a plurality of the BB processors 856, as illustrated in FIG. 24, and the plurality of BB processors 856 may, for example, correspond to a plurality of frequency bands used by the eNB 830. Note that FIG. 25 illustrates an example in which the radio communication interface 855 includes the plurality of BB processors 856, but the radio communication interface 855 may include the single BB processor 856.

The connection interface 857 is an interface for connecting the base station device 850 (radio communication interface 855) to the RRH 860. The connection interface 857 may be a communication module for communication on the high speed line which connects the base station device 850 (radio communication interface 855) to the RRH 860.

Further, the RRH 860 includes a connection interface 861 and a radio communication interface 863.

The connection interface 861 is an interface for connecting the RRH 860 (radio communication interface 863) to the base station device 850. The connection interface 861 may be a communication module for communication on the high speed line.

The radio communication interface 863 transmits and receives a radio signal via the antenna 840. The radio communication interface 863 may typically include the RF circuit 864 or the like. The RF circuit 864 may include a mixer, a filter, an amplifier and the like, and transmits and receives a radio signal via the antenna 840. The radio communication interface 863 may include a plurality of the RF circuits 864 as illustrated in FIG. 25, and the plurality of RF circuits 864 may, for example, correspond to a plurality of antenna elements. Note that FIG. 25 illustrates an example in which the radio communication interface 863 includes the plurality of RF circuits 864, but the radio communication interface 863 may include the single RF circuit 864.

In the eNB 830 illustrated in FIG. 25, one or more constituent elements of the higher layer processor 101 and the controller 103 described with reference to FIG. 6 may be implemented in the radio communication interface 855 and/or the radio communication interface 863. Alternatively, at least some of the constituent elements may be implemented in the controller 851. As one example, a module including a part or the whole of (for example, the BB processor 856) of the radio communication interface 855 and/or the controller 851 may be implemented on the eNB 830. The one or more constituent elements may be implemented in the module. In this case, the module may store a program causing a processor to function as the one or more constituent elements (in other words, a program causing the processor to execute operations of the one or more constituent elements) and execute the program. As another example, a program causing the processor to function as the one or more constituent elements may be installed in the eNB 830, and the radio communication interface 855 (for example, the BB processor 856) and/or the controller 851 may execute the program. In this way, the eNB 830, the base station device 850, or the module may be provided as a device including the one or more constituent elements and a program causing the processor to function as the one or more constituent elements may be provided. In addition, a readable recording medium on which the program is recorded may be provided.

Further, in the eNB 830 illustrated in FIG. 25, for example, the receiver 105 and the transmitter 107 described with reference to FIG. 6 may be implemented in the radio communication interface 863 (for example, the RF circuit 864). Further, the transmission-reception antenna 109 may be implemented in the antenna 840. Further, the network communication section 130 may be implemented in the controller 851 and/or the network interface 853.

### <2.2 Application Example Related to Terminal Device>

### (First Application Example)

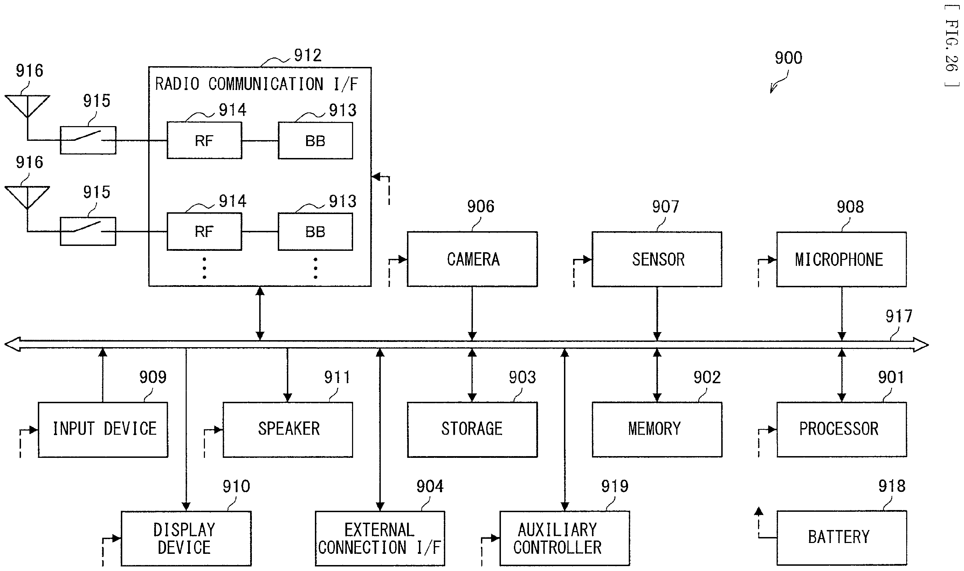

FIG. 26 is a block diagram illustrating an example of a schematic configuration of a smartphone 900 to which the technology according to an embodiment of the present disclosure may be applied. The smartphone 900 includes a processor 901, a memory 902, a storage 903, an external connection interface 904, a camera 906, a sensor 907, a microphone 908, an input device 909, a display device 910, a speaker 911, a radio communication interface 912, one or more antenna switches 915, one or more antennas 916, a bus 917, a battery 918, and an auxiliary controller 919.

The processor 901 may be, for example, a CPU or a system on chip (SoC), and controls the functions of an application layer and other layers of the smartphone 900. The memory 902 includes a RAM and a ROM, and stores a program executed by the processor 901 and data. The storage 903 may include a storage medium such as semiconductor memories and hard disks. The external connection interface 904 is an interface for connecting the smartphone 900 to an externally attached device such as memory cards and universal serial bus (USB) devices.

The camera 906 includes, for example, an image sensor such as charge coupled devices (CCDs) and complementary metal oxide semiconductor (CMOS), and generates a captured image. The sensor 907 may include a sensor group including, for example, a positioning sensor, a gyro sensor, a geomagnetic sensor, an acceleration sensor and the like. The microphone 908 converts a sound that is input into the smartphone 900 to an audio signal. The input device 909 includes, for example, a touch sensor which detects that a screen of the display device 910 is touched, a key pad, a keyboard, a button, a switch or the like, and accepts an operation or an information input from a user. The display device 910 includes a screen such as liquid crystal displays (LCDs) and organic light emitting diode (OLED) displays, and displays an output image of the smartphone 900. The speaker 911 converts the audio signal that is output from the smartphone 900 to a sound.

The radio communication interface 912 supports a cellular communication system such as LTE or LTE-Advanced, and performs radio communication. The radio communication interface 912 may typically include the BB processor 913, the RF circuit 914, and the like. The BB processor 913 may, for example, perform encoding/decoding, modulation/demodulation, multiplexing/demultiplexing, and the like, and performs a variety of types of signal processing for radio communication. On the other hand, the RF circuit 914 may include a mixer, a filter, an amplifier, and the like, and transmits and receives a radio signal via the antenna 916. The radio communication interface 912 may be a one-chip module in which the BB processor 913 and the RF circuit 914 are integrated. The radio communication interface 912 may include a plurality of BB processors 913 and a plurality of RF circuits 914 as illustrated in FIG. 26. Note that FIG. 26 illustrates an example in which the radio communication interface 912 includes a plurality of BB processors 913 and a plurality of RF circuits 914, but the radio communication interface 912 may include a single BB processor 913 or a single RF circuit 914.

Further, the radio communication interface 912 may support other types of radio communication system such as a short range radio communication system, a near field communication system, and a wireless local area network (LAN) system in addition to the cellular communication system, and in this case, the radio communication interface 912 may include the BB processor 913 and the RF circuit 914 for each radio communication system.

Each antenna switch 915 switches a connection destination of the antenna 916 among a plurality of circuits (for example, circuits for different radio communication systems) included in the radio communication interface 912.

Each of the antennas 916 includes one or more antenna elements (for example, a plurality of antenna elements constituting a MIMO antenna) and is used for transmission and reception of the radio signal by the radio communication interface 912. The smartphone 900 may include a plurality of antennas 916 as illustrated in FIG. 26. Note that FIG. 26 illustrates an example in which the smartphone 900 includes a plurality of antennas 916, but the smartphone 900 may include a single antenna 916.

Further, the smartphone 900 may include the antenna 916 for each radio communication system. In this case, the antenna switch 915 may be omitted from a configuration of the smartphone 900.

The bus 917 connects the processor 901, the memory 902, the storage 903, the external connection interface 904, the camera 906, the sensor 907, the microphone 908, the input device 909, the display device 910, the speaker 911, the radio communication interface 912, and the auxiliary controller 919 to each other. The battery 918 supplies electric power to each block of the smartphone 900 illustrated in FIG. 26 via a feeder line that is partially illustrated in the figure as a dashed line. The auxiliary controller 919, for example, operates a minimally necessary function of the smartphone 900 in a sleep mode.

In the smartphone 900 illustrated in FIG. 26, one or more constituent elements of the higher layer processor 201 and the controller 203 described with reference to FIG. 7 may be implemented in the radio communication interface 912. Alternatively, at least some of the constituent elements may be implemented in the processor 901 or the auxiliary controller 919. As one example, a module including a part or the whole of (for example, the BB processor 913) of the radio communication interface 912, the processor 901, and/or the auxiliary controller 919 may be implemented on the smartphone 900. The one or more constituent elements may be implemented in the module. In this case, the module may store a program causing a processor to function as the one or more constituent elements (in other words, a program causing the processor to execute operations of the one or more constituent elements) and execute the program. As another example, a program causing the processor to function as the one or more constituent elements may be installed in the smartphone 900, and the radio communication interface 912 (for example, the BB processor 913), the processor 901, and/or the auxiliary controller 919 may execute the program. In this way, the smartphone 900 or the module may be provided as a device including the one or more constituent elements and a program causing the processor to function as the one or more constituent elements may be provided. In addition, a readable recording medium on which the program is recorded may be provided.

Further, in the smartphone 900 illustrated in FIG. 26, for example, the receiver 205 and the transmitter 207 described with reference to FIG. 7 may be implemented in the radio communication interface 912 (for example, the RF circuit 914). Further, the transmission-reception antenna 209 may be implemented in the antenna 916.

### (Second Application Example)

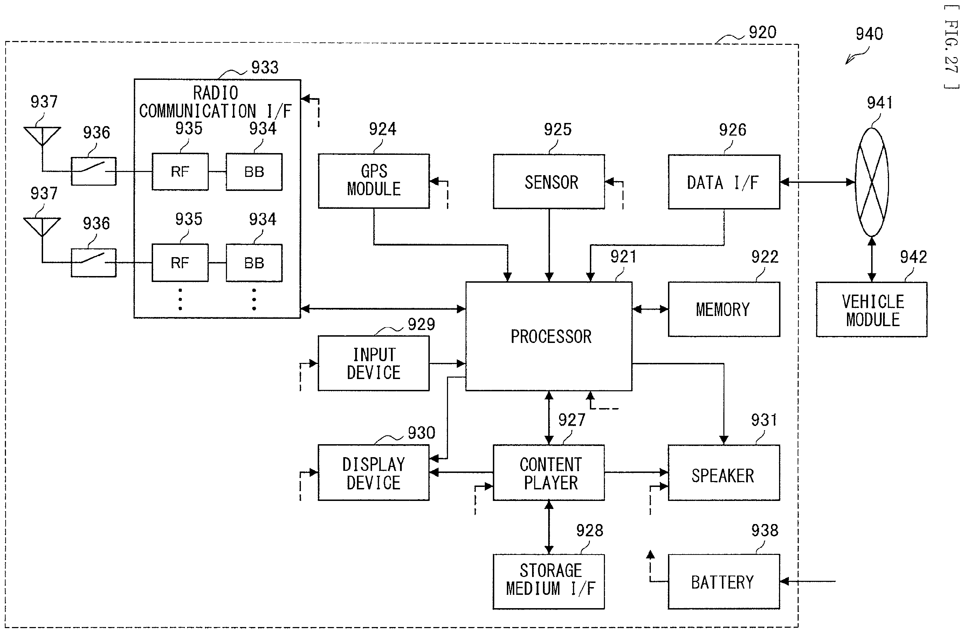

FIG. 27 is a block diagram illustrating an example of a schematic configuration of a car navigation apparatus 920 to which the technology according to an embodiment of the present disclosure may be applied. The car navigation apparatus 920 includes a processor 921, a memory 922, a global positioning system (GPS) module 924, a sensor 925, a data interface 926, a content player 927, a storage medium interface 928, an input device 929, a display device 930, a speaker 931, a radio communication interface 933, one or more antenna switches 936, one or more antennas 937, and a battery 938.

The processor 921 may be, for example, a CPU or an SoC, and controls the navigation function and the other functions of the car navigation apparatus 920. The memory 922 includes a RAM and a ROM, and stores a program executed by the processor 921 and data.

The GPS module 924 uses a GPS signal received from a GPS satellite to measure the position (e.g., latitude, longitude, and altitude) of the car navigation apparatus 920. The sensor 925 may include a sensor group including, for example, a gyro sensor, a geomagnetic sensor, a barometric sensor and the like. The data interface 926 is, for example, connected to an in-vehicle network 941 via a terminal that is not illustrated, and acquires data such as vehicle speed data generated on the vehicle side.

The content player 927 reproduces content stored in a storage medium (e.g., CD or DVD) inserted into the storage medium interface 928. The input device 929 includes, for example, a touch sensor which detects that a screen of the display device 930 is touched, a button, a switch or the like, and accepts operation or information input from a user. The display device 930 includes a screen such as LCDs and OLED displays, and displays an image of the navigation function or the reproduced content. The speaker 931 outputs a sound of the navigation function or the reproduced content.

The radio communication interface 933 supports a cellular communication system such as LTE or LTE-Advanced, and performs radio communication. The radio communication interface 933 may typically include the BB processor 934, the RF circuit 935, and the like. The BB processor 934 may, for example, perform encoding/decoding, modulation/demodulation, multiplexing/demultiplexing, and the like, and performs a variety of types of signal processing for radio communication. On the other hand, the RF circuit 935 may include a mixer, a filter, an amplifier, and the like, and transmits and receives a radio signal via the antenna 937. The radio communication interface 933 may be a one-chip module in which the BB processor 934 and the RF circuit 935 are integrated. The radio communication interface 933 may include a plurality of BB processors 934 and a plurality of RF circuits 935 as illustrated in FIG. 27. Note that FIG. 27 illustrates an example in which the radio communication interface 933 includes a plurality of BB processors 934 and a plurality of RF circuits 935, but the radio communication interface 933 may include a single BB processor 934 or a single RF circuit 935.

Further, the radio communication interface 933 may support other types of radio communication system such as a short range radio communication system, a near field communication system, and a wireless LAN system in addition to the cellular communication system, and in this case, the radio communication interface 933 may include the BB processor 934 and the RF circuit 935 for each radio communication system.

Each antenna switch 936 switches a connection destination of the antenna 937 among a plurality of circuits (for example, circuits for different radio communication systems) included in the radio communication interface 933.

Each of the antennas 937 includes one or more antenna elements (for example, a plurality of antenna elements constituting a MIMO antenna) and is used for transmission and reception of the radio signal by the radio communication interface 933. The car navigation apparatus 920 may include a plurality of antennas 937 as illustrated in FIG. 27. Note that FIG. 27 illustrates an example in which the car navigation apparatus 920 includes a plurality of antennas 937, but the car navigation apparatus 920 may include a single antenna 937.

Further, the car navigation apparatus 920 may include the antenna 937 for each radio communication system. In this case, the antenna switch 936 may be omitted from a configuration of the car navigation apparatus 920.

The battery 938 supplies electric power to each block of the car navigation apparatus 920 illustrated in FIG. 27 via a feeder line that is partially illustrated in the figure as a dashed line. Further, the battery 938 accumulates the electric power supplied from the vehicle.

In the car navigation apparatus 920 illustrated in FIG. 27, one or more constituent elements of the higher layer processor 201 and the controller 203 described with reference to FIG. 7 may be implemented in the radio communication interface 933. Alternatively, at least some of the constituent elements may be implemented in the processor 921. As one example, a module including a part or the whole of (for example, the BB processor 934) of the radio communication interface 933 and/or the processor 921 may be implemented on the car navigation apparatus 920. The one or more constituent elements may be implemented in the module. In this case, the module may store a program causing a processor to function as the one or more constituent elements (in other words, a program causing the processor to execute operations of the one or more constituent elements) and execute the program. As another example, a program causing the processor to function as the one or more constituent elements may be installed in the car navigation apparatus 920, and the radio communication interface 933 (for example, the BB processor 934) and/or the processor 921 may execute the program. In this way, the car navigation apparatus 920 or the module may be provided as a device including the one or more constituent elements and a program causing the processor to function as the one or more constituent elements may be provided. In addition, a readable recording medium on which the program is recorded may be provided.

Further, in the car navigation apparatus 920 illustrated in FIG. 27, for example, the receiver 205 and the transmitter 207 described with reference to FIG. 7 may be implemented in the radio communication interface 933 (for example, the RF circuit 935). Further, the transmission-reception antenna 209 may be implemented in the antenna 937.

The technology of the present disclosure may also be realized as an in-vehicle system (or a vehicle) 940 including one or more blocks of the car navigation apparatus 920, the in-vehicle network 941, and a vehicle module 942. That is, the in-vehicle system (or a vehicle) 940 may be provided as a device that includes at least one of the higher layer processor 201, the controller 203, the receiver 205, and the transmitter 207. The vehicle module 942 generates vehicle data such as vehicle speed, engine speed, and trouble information, and outputs the generated data to the in-vehicle network 941.

### <<3. Conclusion>>

As described above, in the radio communication system according to the present embodiment, the communication device corresponding to the base station device controls to cause control information, which is common to a plurality of terminal devices and includes information related to the radio communication (for example, NOMA) in which a resource is shared between the plurality of terminal devices, to be notified to one of the plurality of terminal devices. At this time, the control information may include information on the resource shared between the plurality of terminal devices.

With such a configuration, according to the radio communication system of the present embodiment, it is possible to reduce resources used for notification of control information to the plurality of terminal devices as an entire system as compared with when control information is individually notified to each of the plurality of terminal devices. That is, according to the radio communication system of the present embodiment, it is possible to further improve the transmission efficiency of the entire system.

Further, in the radio communication system according to the present embodiment, in a case where the radio communication in which a resource is shared between a plurality of terminal devices is performed, the communication device such as the base station device restricts the number of resource blocks, thereby restricting the size of the control information related to the resource blocks. In addition, the communication device may use a part of the data length reserved for the notification of the control information, the part being reserved in accordance with the above-mentioned size restriction, for the notification of the information (for example, MA signature) related to the NOMA.

With such a configuration, for example, the size of the control information for notification of resource block allocation can be restricted compared with the size of the control information for the OMA transmission. That is, according to the radio communication system of the present embodiment, it is possible to further improve the transmission efficiency of the entire system. In addition, by using an area reserved in accordance with the restriction on the size for notification of the NOMA information such as MA signature information, it is possible to make the DCI Payload size of the OMA transmission the same as the DCI Payload size of the NOMA transmission. Therefore, it is possible to notify the DCI without increasing the number of blind decodings regardless of the difference between the OMA transmission and the NOMA transmission. This enables the DCI to be notified without increasing the number of blind decodings regardless of the difference between the OMA transmission and the NOMA transmission. In addition, according to the above-mentioned configuration, since it is unnecessary to newly reserve an area for MA signature notification or the like in the NOMA transmission, it is possible to further improve the transmission efficiency of the entire system as compared with when a new area is provided for the notification.

A preferred embodiment(s) of the present disclosure has/have been described above in detail with reference to the accompanying drawings, but the technical scope of the present disclosure is not limited to such an embodiment(s). It is apparent that a person having ordinary skill in the art of the present disclosure can arrive at various alterations and modifications within the scope of the technical idea described in the appended claims, and it is understood that such alterations and modifications naturally fall within the technical scope of the present disclosure.

Furthermore, the effects described herein are merely illustrative and exemplary, and not limiting. That is, the technique according to an embodiment of the present disclosure can exert other effects that are apparent to those skilled in the art from the description herein, in addition to the above-mentioned effects or in place of the above-mentioned effects.

It is to be noted that the present disclosure may have the following configurations.
(1) A communication device including:
   a communication section that performs radio communication; and
   a controller that controls to cause control information, which is common to a plurality of terminal devices and includes information related to the radio communication in which a resource is shared between the plurality of terminal devices, to be notified to one of the plurality of terminal devices.
(2) The communication device according to (1), in which the control information includes information related to the resource shared between the plurality of terminal devices.
(3) The communication device according to (1) or (2), in which
   the radio communication is communication performed through the resource that is allocated semi-statically, and
   the control information includes information related to enabling or disabling of the communication.
(4) The communication device according to (1) or (2), in which
   the radio communication is communication in which the terminal device selects arbitrarily a resource from a plurality of resources and transmits data to another communication device, and
   the control information includes information related to the plurality of resources shared between the plurality of terminal devices.
(5) The communication device according to any one of (1) to (4), in which the radio communication in which the resource is shared between the plurality of terminal devices is non-orthogonal multiple access communication.
(6) The communication device according to any one of (1) to (5), in which the control information includes information specific to each of the plurality of terminal devices.
(7) The communication device according to any one of (1) to (6), in which the controller controls to cause the control information to be notified to a group to which the plurality of terminal devices belongs.
(8) The communication device according to (7), in which, in a case where a terminal device is added to the group, the controller controls to cause information related to the group to be individually notified to the terminal device.
(9) The communication device according to (7) or (8), in which, in a case where a terminal device is deleted from the group to the group, the controller controls to cause information related to the deletion to be individually notified to the terminal device.
(10) The communication device according to (7) or (8), in which, in a case where the controller individually allocates another resource, which is different from the resource shared between the plurality of terminal devices, to a terminal device belonging to the group, the controller deletes, from the group, the terminal device to which the other resource is allocated.
(11) The communication device according to any one of (7) to (10), in which, in a case where the controller changes the group to which the terminal device belongs to another group, the controller controls to cause information related to the change to be individually notified to the terminal device.
(12) The communication device according to any one of (7) to (11), in which the controller associates identification information for identifying the group with the control information to be notified to the group.
(13) The communication device according to any one of (1) to (12), in which a size of the control information is determined in accordance with the number of terminal devices to which the control information is commonly notified.
(14) A communication device including:
   a communication section that performs radio communication; and
   a controller that controls the radio communication with another communication device on a basis of control information, the control information being related to the radio communication in which a resource is shared between a plurality of terminal devices and being commonly notified to the plurality of terminal devices.
(15) The communication device according to (14), in which the control information is notified to a group to which the communication device belongs.
(16) The communication device according to (15), in which the controller determines which of first control information and second control information the control of the radio communication is performed on a basis of, in accordance with a priority between the first control information and the second control information, the first control information being the control information which is notified to the group, the second control information being individually notified to the communication device.
(17) A communication device including:
   a communication section that performs radio communication; and
   a controller that controls to cause control information related to the radio communication to be notified to a terminal device,
   in a case where the radio communication in which a resource is shared between the plurality of terminal devices is performed, the controller restricting a size of the control information related to a resource block by restricting the number of resource blocks.
(18) The communication device according to (17), in which
   the radio communication in which the resource is shared between the plurality of terminal devices is non-orthogonal multiple access communication, and
   the controller uses, for notification of information related to the non-orthogonal multiple access communication, a part of a data length reserved for the notification of the control information, the part being reserved on a basis of the restriction on the size.
(19) A communication device including:
   a communication section that performs radio communication; and
   an acquisition section that acquires control information related to the radio communication from another communication device,
   a size of the control information being restricted in accordance with the number of resource blocks in a case where the radio communication in which a resource is shared between a plurality of terminal devices is performed.
(20) A communication method performed by a computer, the method including:
   performing radio communication; and
   controlling to cause control information, which is common to a plurality of terminal devices and includes information related to the radio communication in which a resource is shared between the plurality of terminal devices, to be notified to one of the plurality of terminal devices.
(21) A communication method performed by a computer, the method including:
   performing radio communication; and
   controlling the radio communication with another communication device on a basis of control information, the control information being related to the radio communication in which a resource is shared between a plurality of terminal devices and being commonly notified to the plurality of terminal devices.
(22) A communication method performed by a computer, the method including:
   performing radio communication; and
   controlling to cause control information related to the radio communication to be notified to a terminal device,
   in a case where the radio communication in which a resource is shared between the plurality of terminal devices is performed, a size of the control information related to a resource block being restricted by restricting the number of resource blocks.
(23) A communication method performed by a computer, the method including:
   performing radio communication; and
   acquiring control information related to the radio communication from another communication device,
   a size of the control information being restricted in accordance with restriction on the number of resource blocks in a case where the radio communication in which a resource is shared between a plurality of terminal devices is performed.

### Reference Signs List

- 1: base station device
- 101: higher layer processor
- 103: controller
- 105: receiver
- 1051: decoder
- 1053: demodulator
- 1055: demultiplexer
- 1057: radio receiver
- 1059: channel measurement section
- 107: transmitter
- 1071: encoder
- 1073: modulator
- 1075: multiplexer
- 1077: radio transmitter
- 1079: link reference signal generator
- 109: transmission-reception antenna
- 130: network communication section
- 2: terminal device
- 201: higher layer processor
- 203: controller
- 205: receiver
- 2051: decoder
- 2053: demodulator
- 2055: demultiplexer
- 2057: radio receiver
- 2059: channel measurement section
- 207: transmitter
- 2071: encoder
- 2073: modulator
- 2075: multiplexer
- 2077: radio transmitter
- 2079: link reference signal generator
- 209: transmission-reception antenna

## Claims

1. A communication device comprising:
a communication section that performs radio communication; and
a controller that controls to cause control information, which is common to a plurality of terminal devices and includes information related to the radio communication in which a resource is shared between the plurality of terminal devices, to be notified to one of the plurality of terminal devices.

2. The communication device according to claim 1, wherein the control information includes information related to the resource shared between the plurality of terminal devices.

3. The communication device according to claim 1, wherein
the radio communication is communication performed through the resource that is allocated semi-statically, and
the control information includes information related to enabling or disabling of the communication.

4. The communication device according to claim 1, wherein
the radio communication is communication in which the terminal device selects arbitrarily a resource from a plurality of resources and transmits data to another communication device, and
the control information includes information related to the plurality of resources shared between the plurality of terminal devices.

5. The communication device according to claim 1, wherein the radio communication in which the resource is shared between the plurality of terminal devices is non-orthogonal multiple access communication.

6. The communication device according to claim 1, wherein the control information includes information specific to each of the plurality of terminal devices.

7. The communication device according to claim 1, wherein the controller controls to cause the control information to be notified to a group to which the plurality of terminal devices belongs.

8. The communication device according to claim 7, wherein, in a case where a terminal device is added to the group, the controller controls to cause information related to the group to be individually notified to the terminal device.

9. The communication device according to claim 7, wherein, in a case where a terminal device is deleted from the group to the group, the controller controls to cause information related to the deletion to be individually notified to the terminal device.

10. The communication device according to claim 7, wherein, in a case where the controller individually allocates another resource, which is different from the resource shared between the plurality of terminal devices, to a terminal device belonging to the group, the controller deletes, from the group, the terminal device to which the other resource is allocated.

11. The communication device according to claim 7, wherein, in a case where the controller changes the group to which the terminal device belongs to another group, the controller controls to cause information related to the change to be individually notified to the terminal device.

12. The communication device according to claim 7, wherein the controller associates identification information for identifying the group with the control information to be notified to the group.

13. The communication device according to claim 1, wherein a size of the control information is determined in accordance with the number of terminal devices to which the control information is commonly notified.

14. A communication device comprising:
a communication section that performs radio communication; and
a controller that controls the radio communication with another communication device on a basis of control information, the control information being related to the radio communication in which a resource is shared between a plurality of terminal devices and being commonly notified to the plurality of terminal devices.

15. The communication device according to claim 14, wherein the control information is notified to a group to which the communication device belongs.

16. The communication device according to claim 15, wherein the controller determines which of first control information and second control information the control of the radio communication is performed on a basis of, in accordance with a priority between the first control information and the second control information, the first control information being the control information which is notified to the group, the second control information being individually notified to the communication device.

17. A communication device comprising:
a communication section that performs radio communication; and
a controller that controls to cause control information related to the radio communication to be notified to a terminal device,
in a case where the radio communication in which a resource is shared between the plurality of terminal devices is performed, the controller restricting a size of the control information related to a resource block by restricting the number of resource blocks.

18. The communication device according to claim 17, wherein
the radio communication in which the resource is shared between the plurality of terminal devices is non-orthogonal multiple access communication, and
the controller uses, for notification of information related to the non-orthogonal multiple access communication, a part of a data length reserved for the notification of the control information, the part being reserved on a basis of the restriction on the size.

19. A communication device comprising:
a communication section that performs radio communication; and
an acquisition section that acquires control information related to the radio communication from another communication device,
a size of the control information being restricted in accordance with the number of resource blocks in a case where the radio communication in which a resource is shared between a plurality of terminal devices is performed.

20. A communication method performed by a computer, the method comprising:
performing radio communication; and
controlling to cause control information, which is common to a plurality of terminal devices and includes information related to the radio communication in which a resource is shared between the plurality of terminal devices, to be notified to one of the plurality of terminal devices.

21. A communication method performed by a computer, the method comprising:
performing radio communication; and
controlling the radio communication with another communication device on a basis of control information, the control information being related to the radio communication in which a resource is shared between a plurality of terminal devices and being commonly notified to the plurality of terminal devices.

22. A communication method performed by a computer, the method comprising:
performing radio communication; and
controlling to cause control information related to the radio communication to be notified to a terminal device,
in a case where the radio communication in which a resource is shared between the plurality of terminal devices is performed, a size of the control information related to a resource block being restricted by restricting the number of resource blocks.

23. A communication method performed by a computer, the method comprising:
performing radio communication; and
acquiring control information related to the radio communication from another communication device,
a size of the control information being restricted in accordance with restriction on the number of resource blocks in a case where the radio communication in which a resource is shared between a plurality of terminal devices is performed.
